# EUROPEAN PATENT APPLICATION

(11) **EP 4 554 102 A1**
(43) Date of publication of application: **14.05.2025**
(21) Application number: 23834726.4
(22) Date of filing: 29.06.2023
(51) Int. Cl.: H04B 3/54

(54) **MOBILITY CONTROL METHOD, TERMINAL, AND NETWORK SIDE DEVICE**

(30) Priority: 04.07.2022 CN 202210786890
(71) Applicant: Vivo Mobile Communication Co., Ltd., Dongguan, Guangdong 523863 (CN)
(72) Inventor: PU, Wenjuan, Dongguan, Guangdong 523863 (CN); LI, Jianhui, Dongguan, Guangdong 523863 (CN); JI, Zichao, Dongguan, Guangdong 523863 (CN); LIU, Xuanbing, Dongguan, Guangdong 523863 (CN)
(74) Representative: Cabinet Beaumont
(86) International application number: PCT/CN2023/103994
(87) International publication number: WO 2024/007959

(57) **Abstract**

This application discloses a mobility control method, a terminal, and a network side device, pertaining to the field of communication technologies. The mobility control method in embodiments of this application includes: A terminal performs one of the following when the terminal is configured with a first cell and at least one candidate cell: determining a selected cell from the at least one candidate cell based on a network energy saving status of the first cell and/or a network energy saving status of the at least one candidate cell, and applying a conditional reconfiguration parameter corresponding to the selected cell; or performing a first operation when a candidate cell of the at least one candidate cell is in a network sleep state. The first operation includes at least one of the following: deleting a conditional reconfiguration parameter corresponding to the candidate cell in the network sleep state; skipping or delaying a conditional reconfiguration evaluation operation on the candidate cell in the network sleep state; or indicating the candidate cell in the network sleep state to a network side.

## Description

### CROSS-REFERENCE TO RELATED APPLICATIONS

This application claims priority to Chinese Patent Application No. 202210786890.8, filed with the China National Intellectual Property Administration on July 4, 2022 and entitled "MOBILITY CONTROL METHOD, TERMINAL, AND NETWORK SIDE DEVICE", which is incorporated herein by reference in its entirety.

### TECHNICAL FIELD

This application pertains to the field of communication technologies, and specifically relates to a mobility control method, a terminal, and a network side device.

### BACKGROUND

In the conventional fourth generation (Fourth Generation, 4G) and fifth generation (Fifth Generation, 5G) Release 15, a terminal first measures a target cell and reports a measurement result, and then a network side sends a handover command to hand over the terminal from a source cell to the target cell. This process has a large delay, which affects service continuity of the terminal. Therefore, a conditional handover (Conditional Handover, CHO) mechanism is introduced into the 3rd Generation Partnership Project (3rd Generation Partnership Project, 3GPP) Release 16. To be specific, a network sends, to a terminal in advance, a configuration of a target cell and a conditional configuration for performing handover, and the terminal directly performs conditional handover based on stored configuration information of the target cell when a condition for performing handover is met. In addition, a related mechanism is extended to a primary secondary cell (Primary Secondary Cell, PSCell) addition or change scenario to improve robustness of PSCell addition or change, which is named a conditional primary secondary cell addition or change (Conditional PSCell Addition or Change, CPAC) mechanism. CHO is limited to use by a master cell group (Master Cell Group, MCG) in single connectivity or dual connectivity. Conditional primary secondary cell change (Conditional PSCell Change, CPC) is limited to use only by a secondary cell group (Secondary Cell Group, SCG) in dual connectivity. Conditional primary secondary cell addition (Conditional PSCell Addition, CPA) is applicable to adding a PSCell for a terminal in a single connectivity scenario to become dual connectivity.

In addition, with further development of mobile communication technologies, network energy efficiency is considered as one of key performance requirements of a communication system, and a network energy saving function is introduced into the communication system. In the related art, when conditional handover or addition is configured for a terminal or the terminal performs conditional handover or addition, related information of network energy saving is not considered. Consequently, the terminal may not be capable of handing over to or adding a suitable cell, and service continuity of the terminal and flexibility of handover or addition cannot be ensured.

### SUMMARY

Embodiments of this application provide a mobility control method, a terminal, and a network side device, to resolve problems that a terminal may not be capable of handing over to or adding a suitable cell in a network energy saving scenario, and service continuity of the terminal and flexibility of handover or addition cannot be ensured.

According to a first aspect, a mobility control method is provided, applied to a terminal. The method includes:
performing one of the following when the terminal is configured with a first cell and at least one candidate cell:
determining a selected cell from the at least one candidate cell based on a network energy saving status of the first cell and/or a network energy saving status of the at least one candidate cell, and applying a conditional reconfiguration parameter corresponding to the selected cell; or
performing a first operation when a candidate cell of the at least one candidate cell is in a network sleep state, where the first operation includes at least one of the following:
deleting a conditional reconfiguration parameter corresponding to the candidate cell in the network sleep state;
skipping or delaying a conditional reconfiguration evaluation operation on the candidate cell in the network sleep state; or
indicating the candidate cell in the network sleep state to a network side.

When the first cell is a source cell, the candidate cell is a candidate target cell, and the conditional reconfiguration parameter includes a conditional handover CHO configuration parameter and/or a conditional primary secondary cell change CPC configuration parameter. When the first cell is a master cell, the candidate cell is a candidate primary secondary cell, and the conditional reconfiguration parameter includes a conditional primary secondary cell addition CPA configuration parameter.

According to a second aspect, a mobility control apparatus is provided, used in a terminal. The apparatus includes:
a first processing module, configured to perform one of the following when the terminal is configured with a first cell and at least one candidate cell:
determining a selected cell from the at least one candidate cell based on a network energy saving status of the first cell and/or a network energy saving status of the at least one candidate cell, and applying a conditional reconfiguration parameter corresponding to the selected cell; or
performing a first operation when a candidate cell of the at least one candidate cell is in a network sleep state, where the first operation includes at least one of the following:
   deleting a conditional reconfiguration parameter corresponding to the candidate cell in the network sleep state;
   skipping or delaying a conditional reconfiguration evaluation operation on the candidate cell in the network sleep state; or
   indicating the candidate cell in the network sleep state to a network side.

When the first cell is a source cell, the candidate cell is a candidate target cell, and the conditional reconfiguration parameter includes a CHO configuration parameter and/or a CPC configuration parameter. When the first cell is a master cell, the candidate cell is a candidate primary secondary cell, and the conditional reconfiguration parameter includes a CPA configuration parameter.

According to a third aspect, a mobility control method is provided, applied to a first base station. The method includes:
sending a first request to at least one candidate base station, where the first request is used to request to configure a candidate cell for a terminal; and
receiving a first response from the at least one candidate base station, where the first response is used to respond to the first request.

The first response carries first configuration information indicating that the first request is accepted and the first configuration information includes a conditional reconfiguration parameter corresponding to the candidate cell, or the first response carries second configuration information indicating that the first request is rejected and the second configuration information indicates that a rejection cause is related to network sleep. The conditional reconfiguration parameter includes a network energy saving parameter related to a network energy saving status of the candidate cell.

When the first base station is a source base station, the candidate base station is a candidate target base station, the candidate cell is a candidate target cell, and the conditional reconfiguration parameter includes a CHO configuration parameter and/or a CPC configuration parameter. When the first base station is a mater node, the candidate base station is a candidate secondary node, the candidate cell is a candidate primary secondary cell, and the conditional reconfiguration parameter includes a CPC configuration parameter and/or a CPA configuration parameter.

According to a fourth aspect, a mobility control apparatus is provided, used in a first base station. The apparatus includes:
a first sending module, configured to send a first request to at least one candidate base station, where the first request is used to request to configure a candidate cell for a terminal; and
a first receiving module, configured to receive a first response from the at least one candidate base station, where the first response is used to respond to the first request.

The first response carries first configuration information indicating that the first request is accepted and the first configuration information includes a conditional reconfiguration parameter corresponding to the candidate cell, or the first response carries second configuration information indicating that the first request is rejected and the second configuration information indicates that a rejection cause is related to network sleep. The conditional reconfiguration parameter includes a network energy saving parameter related to a network energy saving status of the candidate cell.

When the candidate base station is a candidate target base station, the candidate cell is a candidate target cell, and the conditional reconfiguration parameter includes a CHO configuration parameter and/or a CPC configuration parameter. When the candidate base station is a candidate secondary node, the candidate cell is a candidate primary secondary cell, and the conditional reconfiguration parameter includes a CPC configuration parameter and/or a CPA configuration parameter.

According to a fifth aspect, a mobility control method is provided, applied to a candidate base station. The method includes:
receiving a first request from a first base station, where the first request is used to request to configure a candidate cell for a terminal; and
sending a first response to the first base station, where the first response is used to respond to the first request, and the first response carries first configuration information indicating that the first request is accepted and the first configuration information includes a conditional reconfiguration parameter corresponding to the candidate cell, or the first response carries second configuration information indicating that the first request is rejected and the second configuration information indicates that a rejection cause is related to network sleep, where the conditional reconfiguration parameter includes a network energy saving parameter related to a network energy saving status of the candidate cell.

When the first base station is a source base station, the candidate base station is a candidate target base station, the candidate cell is a candidate target cell, and the conditional reconfiguration parameter includes a CHO configuration parameter and/or a CPC configuration parameter. When the first base station is a mater node, the candidate base station is a candidate secondary node, the candidate cell is a candidate primary secondary cell, and the conditional reconfiguration parameter includes a CPC configuration parameter and/or a CPA configuration parameter.

According to a sixth aspect, a mobility control apparatus is provided, used in a candidate base station. The apparatus includes:
a second receiving module, configured to receive a first request from a first base station, where the first request is used to request to configure a candidate cell for a terminal; and
a third sending module, configured to send a first response to the first base station, where the first response is used to respond to the first request, and the first response carries first configuration information indicating that the first request is accepted and the first configuration information includes a conditional reconfiguration parameter corresponding to the candidate cell, or the first response carries second configuration information indicating that the first request is rejected and the second configuration information indicates that a rejection cause is related to network sleep, where the conditional reconfiguration parameter includes a network energy saving parameter related to a network energy saving status of the candidate cell.

When the first base station is a source base station, the candidate cell is a candidate target cell, and the conditional reconfiguration parameter includes a CHO configuration parameter and/or a CPC configuration parameter. When the first base station is a mater node, the candidate cell is a candidate primary secondary cell, and the conditional reconfiguration parameter includes a CPC configuration parameter and/or a CPA configuration parameter.

According to a seventh aspect, a terminal is provided. The terminal includes a processor and a memory. The memory stores a program or instructions executable on the processor. When the program or instructions are executed by the processor, steps of the method according to the first aspect are implemented.

According to an eighth aspect, a network side device is provided. The network side device includes a processor and a memory. The memory stores a program or instructions executable on the processor. When the program or instructions are executed by the processor, steps of the method according to the third aspect or the fifth aspect are implemented.

According to a ninth aspect, a mobility control system is provided, including: a terminal and a network side device. The terminal may be configured to perform steps of the mobility control method according to the first aspect. The network side device may be configured to perform steps of the mobility control method according to the third aspect or the fifth aspect.

According to a tenth aspect, a readable storage medium is provided. The readable storage medium stores a program or instructions. When the program or instructions are executed by a processor, steps of the method according to the first aspect or the method according to the third aspect or the fifth aspect are implemented.

According to an eleventh aspect, a chip is provided. The chip includes a processor and a communication interface. The communication interface is coupled to the processor. The processor is configured to run a program or instructions to implement the method according to the first aspect or the method according to the third aspect or the fifth aspect.

According to a twelfth aspect, a computer program/program product is provided. The computer program/program product is stored in a storage medium. The computer program/program product is executed by at least one processor to implement steps of the method according to the first aspect.

In embodiments of this application, the terminal may choose to delete the conditional reconfiguration parameter corresponding to the candidate cell in the network sleep state. Because the conditional reconfiguration parameter corresponding to the candidate cell in the network sleep state is deleted, the terminal can be prevented from handing over to or adding the candidate cell in the network sleep state, and possible transmission interruption can be avoided, thereby ensuring service continuity of the terminal. The terminal may choose not to perform the conditional reconfiguration evaluation operation on the candidate cell in the network sleep state. Because the conditional reconfiguration evaluation operation on the candidate cell in the network sleep state is not performed, the candidate cell in the network sleep state is not selected by the terminal, so that service continuity of the terminal can be ensured. The terminal may choose to delay the conditional reconfiguration evaluation operation on the candidate cell in the network sleep state. Because the terminal chooses to delay the conditional reconfiguration evaluation operation on the candidate cell in the network sleep state, the candidate cell can have time to restore to an operating state from the network sleep state, thereby ensuring flexibility of handover or addition of the terminal. The terminal may notify the network side of information about the candidate cell in the network sleep state, so that the network side learns the state of the candidate cell in time and then performs corresponding processing. The terminal may determine a selected cell from one or more candidate cells based on the network energy saving status of the first cell and/or network energy saving statuses of the one or more candidate cells, and apply a conditional reconfiguration parameter corresponding to the selected cell. Because the terminal considers network energy saving information of the first cell and/or network energy saving information of the one or more candidate cells, the terminal can hand over to or add a suitable cell in a network energy saving scenario, thereby ensuring service continuity of the terminal and flexibility of handover or addition.

### BRIEF DESCRIPTION OF THE DRAWINGS

FIG. 1 is a block diagram of a wireless communication system to which an embodiment of this application may be applied;
FIG. 2 is a flowchart of a mobility control method according to an embodiment of this application;
FIG. 3 is a flowchart of another mobility control method according to an embodiment of this application;
FIG. 4 is a structural block diagram of a mobility control apparatus according to an embodiment of this application;
FIG. 5 is a structural block diagram of another mobility control apparatus according to an embodiment of this application;
FIG. 6 is a structural block diagram of still another mobility control apparatus according to an embodiment of this application;
FIG. 7 is a structural block diagram of a communication device according to an embodiment of this application;
FIG. 8 is a diagram of a hardware structure of a terminal according to embodiments of this application; and
FIG. 9 is a diagram of a hardware structure of a network side device according to embodiments of this application.

### DETAILED DESCRIPTION

Technical solutions in embodiments of this application are clearly described below with reference to accompanying drawings in embodiments of this application. Clearly, the described embodiments are merely a part rather than all of embodiments of this application. All other embodiments obtained by a person skilled in the art based on embodiments of this application fall within the protection scope of this application.

Terms such as "first" and "second" in the specification and claims of this application are used to distinguish similar objects, rather than describe a specific sequence or order. It should be understood that, terms used in such a manner are interchangeable in a proper circumstance, so that embodiments of this application can be implemented in other orders than those illustrated or described herein. Moreover, objects distinguished by "first" and "second" are usually of a same type, and quantities of the objects are not limited. For example, there may be one or more first objects. Furthermore, in the specification and claims, "and/or" represents at least one of associated objects, and the character "/" generally indicates an "or" relationship between the associated objects.

It should be noted that, technologies described in embodiments of this application are not limited to a long term evolution (Long Term Evolution, LTE)/LTE-advanced (LTE-Advanced, LTE-A) system, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), and other systems. The terms "system" and "network" in embodiments of this application are often used interchangeably, and the technologies described may be applied to the foregoing systems and radio technologies as well as other systems and radio technologies. A new radio (New Radio, NR) system is described below for a purpose of illustration, and NR terminology is used in most of the following descriptions. However, these technologies may also be applied to applications other than NR system applications, for example, a 6th generation (6th Generation, 6G) communication system.

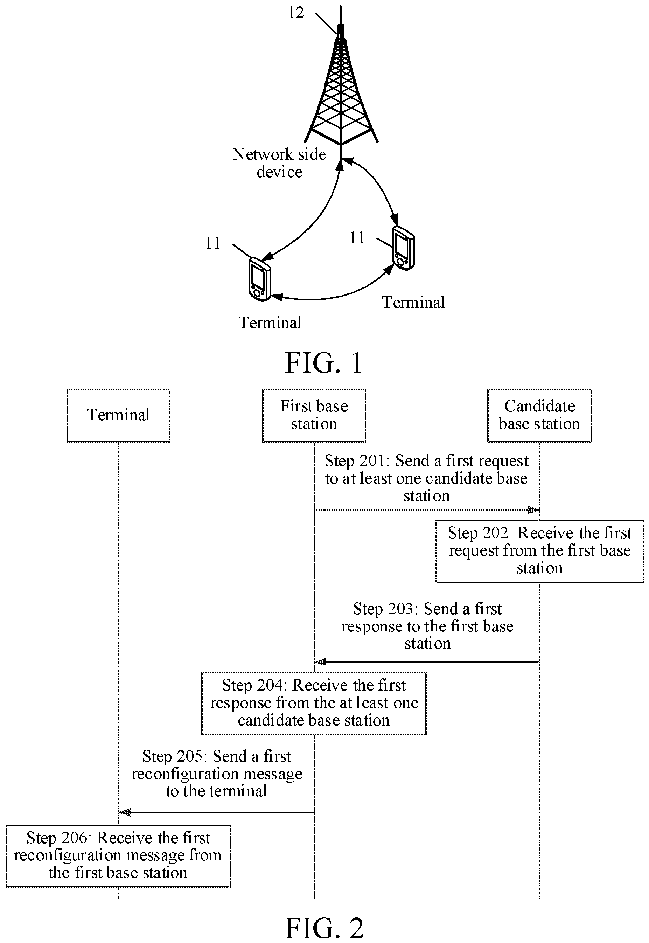

FIG. 1 is a block diagram of a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a vehicle user equipment (Vehicle User Equipment, VUE), a pedestrian user equipment (Pedestrian User Equipment, PUE), a smart home device (a home device having a wireless communication function, for example, a refrigerator, a television, a washing machine, or furniture), a game console, a personal computer (Personal Computer, PC), a teller machine, or a self-service machine. The wearable device includes a smart watch, a smart band, a smart headphone, smart glasses, smart jewelry (a smart bracelet, a smart wrist chain, a smart ring, a smart necklace, a smart anklet, or a smart ankle chain), a smart wrist band, smart clothing, or the like. It should be noted that, a specific type of the terminal 11 is not limited in this embodiment of this application. The network side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or some other suitable terminology in the art. The base station is not limited to a specific technical vocabulary provided that the same technical effects are achieved. It should be noted that, in embodiments of this application, only a base station in an NR system is used as an example for description, while a specific type of the base station is not limited.

For ease of understanding a mobility control method according to embodiments of this application, the following related technologies are now described:
1. Conditional handover (Conditional Handover, CHO)

The conditional handover is handover performed by a terminal when one or more predefined handover execution conditions are met. One execution condition includes one or more trigger conditions (for example, a CHO event A3/A5).

A CHO process mainly includes the following steps:
Step 1: When determining to use CHO, a source base station sends a handover request message to one or more candidate target base stations, to request to configure a candidate target cell (Candidate Target Cell) for a terminal.
Step 2: The source base station receives handover request response messages from the candidate target base stations. Each handover request response message includes a conditional reconfiguration parameter of a candidate target cell corresponding to a candidate target base station.
Step 3: The source base station sends a radio resource control (Radio Resource Control, RRC) reconfiguration message to the terminal. The RRC reconfiguration message includes a CHO configuration, and the CHO configuration includes a conditional reconfiguration parameter corresponding to each candidate target cell and a CHO execution condition that is configured by the source base station.
Step 4: After receiving the RRC reconfiguration message from the source base station, the terminal sends an RRC reconfiguration complete message to the source base station, and starts to perform evaluation based on the CHO execution condition.
Step 5: If there is one or more candidate target cells that meet the execution condition, the terminal selects one of the candidate target cells as a selected cell, and performs a CHO operation on the selected cell. Specifically, the terminal applies a CHO configuration parameter of the selected cell, initiates random access to the selected cell, and sends a reconfiguration complete message to a candidate target base station corresponding to the selected cell. When the terminal starts to establish synchronization with the selected cell, the terminal stops monitoring a source cell. After the handover, the terminal stops condition evaluation, and releases the CHO configuration.
Step 6: The candidate target base station corresponding to the selected cell notifies the source base station of a terminal handover success.
Step 7: The source base station notifies another candidate target base station of a handover cancellation.

### 2. Conditional primary secondary cell change (Conditional PSCell Change, CPC)

The foregoing conditional handover mechanism may be applied to primary secondary cell (Primary Secondary Cell, PSCell) change (Change) in dual connectivity, which is referred to as conditional primary secondary cell change (Conditional PSCell Change, CPC) in this case.

**In** dual connectivity, a terminal maintains connections to two base stations, that is, a mater node (Master Node, MN) and a secondary node (Secondary Node, SN), and can exchange signaling and data with the two base stations at the same time. When the conditional handover mechanism is introduced into PSCell Change, the MN or the SN may configure a CPC configuration parameter (or referred to as a CPC configuration) for the terminal. One CPC configuration may include an identifier of one candidate PSCell, a radio parameter configured by the candidate PSCell for the terminal, a PSCell change condition, and the like. There may be a plurality of candidate PSCells. A source PSCell may send a request to one or more candidate PSCells, and then each candidate PSCell performs a configuration and sends the configuration to the terminal via the source PSCell. The change condition is, for example, performing PSCell change when signal quality of the candidate PSCell exceeds a predetermined threshold or the signal quality of the candidate PSCell exceeds signal quality of the source PSCell by a preset offset.

The MN and the SN may initiate Inter-SN CPC, and the terminal sends a reconfiguration complete message to the MN after the CPC. The SN may initiate Intra-SN CPC. This process is transparent to the MN. The terminal sends a reconfiguration complete message to the SN after the CPC. A basic principle for the terminal to perform CPC is similar to that of CHO.

### 3. Conditional primary secondary cell addition (Conditional PSCell Addition, CPA)

To improve reliability of adding a secondary node (Secondary node, SN)/a primary secondary cell (Primary Secondary Cell, PSCell), a CPA procedure is proposed. For example, a master node (Master Node, MN) sends CPA information of a plurality of candidate PSCells to a terminal by using one or more RRC messages. For each candidate PSCell, the CPA information may include PSCell addition condition (or referred to as an SN addition condition) information and configuration information. The PSCell addition condition information may include an event for performing PSCell addition and a threshold corresponding to the event. Then, the terminal uses a candidate PSCell that meets the addition condition information as a PSCell to be accessed, and accesses the PSCell. This improves a success rate of PSCell addition or SN addition.

### 4. NR event

Event A3 (Event A3): It indicates that quality of an intra-frequency/inter-frequency neighboring cell is higher than quality of a serving cell by an offset.

Event A4 (Event A4): It indicates that quality of an inter-frequency neighboring cell is higher than a specific threshold.

Event A5 (Event A5): It indicates that quality of a serving cell is lower than a specific threshold and quality of a neighboring cell is higher than a specific threshold.

Event T1 (Event T1): It indicates that a time at which the terminal performs measurement exceeds a specific moment.

Event D1 (Event D1): It indicates that a distance between a location of a terminal and a reference point is within a given range.

A conditional event may be understood as an event configured in a conditional configuration (for example, an event A3 configured in a CHO configuration is a conditional event A3).

### 5. Network energy saving

Network energy efficiency is listed as one of 13 performance requirements of IMT-2020. Most of power consumption of an NR network comes from a base station, and 90% of power consumption of the NR base station comes from an active antenna unit. Due to a higher frequency band, a wider bandwidth, more carrier frequencies, and the like, currently, power consumption of a single base station of NR is three to four times higher than that of LTE. In addition, in terms of OPEX, electricity bills of base stations account for nearly 20% of entire network operation costs. For some operators, electricity charge accounts for more than half of total profits. Therefore, network energy saving of NR becomes more critical to realize great success of 5G. Based on actual load situations, the base station may implement energy saving measures at different levels.

In embodiments of this application, a network energy saving status includes a network sleep state and a network non-sleep state. Based on network energy saving measures in at least one of a frequency domain, a time domain, a power domain, and a space domain, the network sleep state may include a plurality of cases, for example, receiving only (RX only), sending only (TX only), transmitting only a synchronization signal and physical broadcast channel block (Synchronization Signal and PBCH block, SSB, or referred to as a synchronization signal block), that is, SSB only, not performing any receiving or sending operation (None), performing sparse sending (sparse), which may be understood as longperiodicity sending, disabling a base station, disabling a carrier/cell, disabling a channel, disabling an SSB/beam, and disabling an antenna/panel.

The mobility control method provided in embodiments of this application is described in detail below by using some embodiments and application scenarios of the embodiments.

FIG. 2 is a flowchart of a mobility control method according to an embodiment of this application. In this embodiment of this application, when conditional handover or addition is configured for a terminal, a network energy saving function is introduced. As shown in FIG. 2, the method may include the following steps: step 201, step 202, step 203, step 204, step 205, and step 206.

A first base station performs step 201: Send a first request to at least one candidate base station. The first request is used to request to configure a candidate cell for the terminal.

In this embodiment of this application, when the first base station is a source base station, the candidate base station is a candidate target base station, a serving cell (that is, a first cell) in which the terminal is currently located is a source cell, and the candidate cell is a candidate target cell. When the first base station is a mater node, the candidate base station is a candidate secondary node, the serving cell (that is, the first cell) in which the terminal is currently located is a master cell, and the candidate cell is a candidate primary secondary cell. If the terminal receives a CHO configuration, the source cell is specifically a source master cell, and the candidate target cell is specifically a candidate target master cell. If the terminal receives a CPC configuration, the source cell is specifically a source primary secondary cell, and the candidate target cell is specifically a candidate target primary secondary cell.

The candidate base station performs step 202: Receive the first request from the first base station.

The candidate base station performs step 203: Send a first response to the first base station. The first response is used to respond to the first request, and the first response carries first configuration information indicating that the first request is accepted and the first configuration information includes a conditional reconfiguration parameter corresponding to the candidate cell, or the first response carries second configuration information indicating that the first request is rejected and the second configuration information indicates that a rejection cause is related to network sleep. The conditional reconfiguration parameter includes a network energy saving parameter related to a network energy saving status of the candidate cell.

In this embodiment of this application, when the first base station is a source base station, the conditional reconfiguration parameter includes a CHO configuration parameter and/or a CPC configuration parameter. The CHO configuration parameter, or referred to as a CHO configuration, is used by the terminal to perform a CHO procedure. The CHO configuration parameter may include: an execution condition of CHO, and a conditional reconfiguration parameter (RRC reconfiguration message or parameter) corresponding to each candidate target cell. The CPC configuration parameter, or referred to as a CPC configuration, is used by the terminal to perform a CPC procedure. The CPC configuration parameter may include: an execution condition of CPC, and the conditional reconfiguration parameter (RRC reconfiguration message or parameter) corresponding to each candidate target cell.

In this embodiment of this application, when the first base station is a mater node, the conditional reconfiguration parameter includes a CPC configuration parameter and/or a CPA configuration parameter. The CPA configuration parameter, or referred to as a CPA configuration, is used by the terminal to perform a CPA procedure. The CPA configuration parameter may include: an execution condition of CPA, and a conditional reconfiguration parameter (RRC reconfiguration message or parameter) corresponding to each candidate primary secondary cell.

The first base station performs step 204: Receive the first response from the at least one candidate base station.

When the first response carries the first configuration information indicating that the handover request is accepted, and the first configuration information includes the conditional reconfiguration parameter corresponding to the candidate cell, the first base station performs step 205: Send a first reconfiguration message to the terminal. The first reconfiguration message carries the following configuration information: the conditional reconfiguration parameter corresponding to the candidate cell, and an execution condition for determining to perform conditional reconfiguration.

The terminal performs step 206: Receive the first reconfiguration message from the first base station.

In this way, the terminal is configured with the first cell and at least one candidate cell.

In an example, a CHO process is used as an example. The terminal is in a connected state, and the source cell currently serving is a cell 1. The source base station sends a first request to candidate target base stations 1, 2, and 3, to request to configure a candidate target cell. The source base station receives a first response corresponding to the candidate target base station 2. The first response indicates that the handover request is rejected, and indicates that a rejection cause is related to network sleep. The source base station receives first responses corresponding to the other candidate target base stations 3 and 4. The first responses indicate that the first request is accepted. The source base station sends an RRC reconfiguration message to the terminal. The RRC reconfiguration message includes conditional reconfiguration parameters of candidate target cells corresponding to the candidate target base stations 3 and 4.

It can be learned that, in this embodiment of this application, in a case that a network energy saving function is introduced, when the first base station requests the candidate base station to allocate a related resource for conditional reconfiguration to the terminal, the candidate base station may allocate, to the terminal, a related resource and a configuration parameter related to network energy saving, so that the terminal may select, with reference to the configuration parameter related to network energy saving, a cell to be handed over to or added. Alternatively, the candidate base station may reject allocation of a related resource based on consideration of network energy saving, to prevent the terminal from conditionally handing over to or adding a cell in a network sleep state.

In some embodiments, the conditional reconfiguration parameter may include at least one of the following:
a sleep probability of the candidate cell;
a sleep probability threshold;
information indicating whether the terminal is allowed to perform conditional reconfiguration during network sleep of the candidate cell;
a quality threshold offset used to adjust a quality threshold of the candidate cell based on an energy saving status of the candidate cell;
a priority parameter of the candidate cell;
a validity period of the conditional reconfiguration parameter of the candidate cell; or
a sleep configuration parameter of the candidate cell, including: sleep time information, a downlink reference signal configuration for sleep, and two random access resources or a WUS configuration for wake-up during network sleep, where the two random access resources may include a first random access resource and a second random access resource, the first random access resource is used by the terminal to initiate random access when the candidate cell is not in the network sleep state, and the second random access resource is used by the terminal to initiate random access when the candidate cell is in the network sleep state.

Among the foregoing parameters, the sleep probability of the candidate cell, the information indicating whether the terminal is allowed to perform conditional reconfiguration during network sleep of the candidate cell, the priority parameter of the candidate cell, the validity period of the conditional reconfiguration parameter of the candidate cell, and the sleep configuration parameter of the candidate cell are configured by the candidate base station for each candidate cell. In other words, the candidate base station uses the first response to carry the foregoing configuration information of the corresponding candidate cell when sending the first response to the first base station. Alternatively, the foregoing parameter may be configured by the first base station or agreed on in a protocol. For example, the first base station may configure the quality threshold offset and the information indicating whether the terminal is allowed to perform conditional reconfiguration during network sleep of the candidate cell, and the sleep probability threshold is agreed on in a protocol.

The quality threshold offset is used to adjust the quality threshold of the candidate cell based on the energy saving status of the candidate cell. For example, the quality threshold for conditional reconfiguration is A, and the quality threshold offset is B. When the candidate cell is in the network sleep state, the quality threshold of the candidate cell is A+B. For another example, when the first cell is in the network sleep state, the quality threshold is A-B. The sleep probability indicates a probability that the candidate cell sleeps within a future period of time.

In some embodiments, in the provided mobility control method, after step 205 in the embodiment shown in FIG. 2, the following step 207 (not shown in the figure) may be further added.

The first base station performs step 207: Perform at least one of the following when determining that at least one candidate cell is in the network sleep state: sending a second reconfiguration message to the terminal, where the second reconfiguration message indicates the terminal to delete a conditional reconfiguration parameter corresponding to the candidate cell in the network sleep state;
deleting the conditional reconfiguration parameter corresponding to the candidate cell in the network sleep state; or
requesting the candidate base station to wake up the candidate target cell in the network sleep state.

In an example, a CHO process is used as an example. The terminal is in a connected state, and the source cell currently serving is a cell 1. The terminal is configured with CHO configurations, including RRC reconfiguration messages and handover execution conditions respectively corresponding to candidate target cells, namely, a cell 2, a cell 3, and a cell 4. When the cell 2 needs to enter the network sleep state, the source base station may perform at least one of the following: deleting a locally stored CHO configuration corresponding to the cell 2, indicating the terminal to delete a CHO configuration corresponding to the cell 2, or requesting a candidate target base station corresponding to the cell 2 to wake up the cell 2.

It can be learned that, in this embodiment of this application, when the candidate cell is in the network sleep state, the first base station may indicate the terminal to delete the conditional reconfiguration parameter corresponding to the candidate cell in the network sleep state, to avoid a problem that service continuity of the terminal cannot be ensured because the terminal selects the candidate cell in the network sleep state when selecting a cell to be handed over to or added. When the candidate cell is in the network sleep state, the first base station may delete the conditional reconfiguration parameter corresponding to the candidate cell in the network sleep state, without waiting for a network side to send a command for deleting the conditional reconfiguration parameter of the candidate cell. When the candidate cell is in the network sleep state, the first base station may request the candidate base station to wake up the candidate cell in the network sleep state, to ensure that the candidate cell selected when the terminal selects a cell to be handed over to or added is in a normal operating state, thereby ensuring service continuity of the terminal.

In some embodiments, the first base station receives indication information from the terminal, and determines, based on the indication information, that at least one candidate cell is in the network sleep state. For example, the terminal may measure each candidate cell, and determine a state of each candidate cell based on a measurement result. If the measurement results meet a specific requirement, it is determined that the candidate cell is in the network sleep state. In this case, the candidate cell in the network sleep state is reported to the source base station.

It can be learned that, in this embodiment of this application, because the terminal maintains a connection to the first base station before handing over to or adding the selected cell, the terminal may notify, by using short-latency signaling such as a MAC CE or UCI, the first base station of information indicating that the candidate cell is in the network sleep state, which may be faster than when the first base station obtains the sleep state information from the candidate base station through a network interface.

In some embodiments, the first base station receives a sleep request or sleep indication information from a candidate base station corresponding to a candidate cell in the network sleep state, and determines, based on the sleep request or the sleep indication information, that at least one candidate cell is in the network sleep state. In other words, when the candidate cell is in the sleep state, the candidate base station corresponding to the candidate cell may send, to the first base station, information about the candidate cell in the network sleep state.

It can be learned that, in this embodiment of this application, because the candidate cell is allocated by the corresponding candidate base station, and the candidate base station learns a state of the candidate cell better, it is more accurate for the first base station to determine, based on the sleep request or the sleep indication information of the candidate base station, that the candidate cell is in the network sleep state.

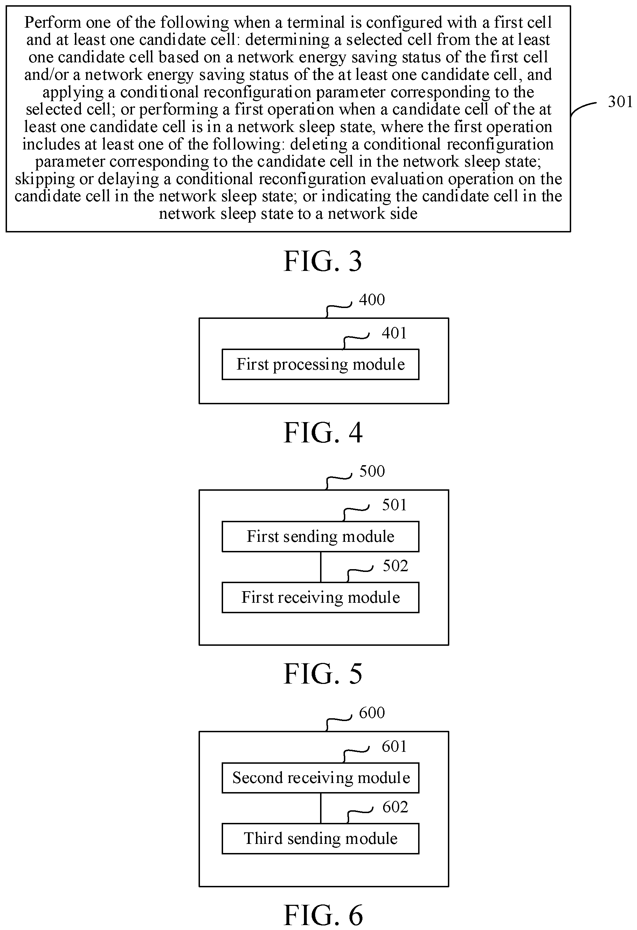

After the network side sends at least one of the following configurations for the terminal: a CHO configuration, a CPC configuration, and a CPA configuration, the terminal performs a corresponding conditional handover and/or addition procedure. FIG. 3 is a flowchart of another mobility control method according to an embodiment of this application, applied to a terminal. As shown in FIG. 3, the method may include the following step 301.

Step 301: Perform one of the following when the terminal is configured with a first cell and at least one candidate cell: determining a selected cell from the at least one candidate cell based on a network energy saving status of the first cell and/or a network energy saving status of the at least one candidate cell, and applying a conditional reconfiguration parameter corresponding to the selected cell; or performing a first operation when a candidate cell of the at least one candidate cell is in a network sleep state, where the first operation includes at least one of the following: deleting a conditional reconfiguration parameter corresponding to the candidate cell in the network sleep state; skipping or delaying a conditional reconfiguration evaluation operation on the candidate cell in the network sleep state; or indicating the candidate cell in the network sleep state to a network side.

In this embodiment of this application, when the first cell is a source cell, the candidate cell is a candidate target cell, and the conditional reconfiguration parameter includes a conditional handover CHO configuration parameter and/or a conditional primary secondary cell change CPC configuration parameter. When the first cell is a master cell, the candidate cell is a candidate primary secondary cell, and the conditional reconfiguration parameter includes a CPA configuration parameter.

For example, the first cell is a source cell, and the candidate cell is a candidate target cell. The conditional reconfiguration parameter may include at least one of the following:
a sleep probability of the candidate target cell;
a sleep probability threshold;
information indicating whether the terminal is allowed to perform conditional reconfiguration during network sleep of the candidate target cell;
a quality threshold offset used to adjust a quality threshold of the candidate target cell based on an energy saving status of the candidate target cell;
a priority parameter of the candidate target cell;
a validity period of the conditional reconfiguration parameter of the candidate target cell; or
a sleep configuration parameter of the candidate target cell, including: sleep time information, a downlink reference signal configuration for sleep, and two random access resources or a WUS configuration for wake-up during network sleep.

For example, the first cell is a master cell, and the candidate cell is a candidate primary secondary cell. The conditional reconfiguration parameter may include at least one of the following:
a sleep probability of the candidate primary secondary cell;
a sleep probability threshold;
information indicating whether the terminal is allowed to perform conditional reconfiguration during network sleep of the candidate primary secondary cell;
a quality threshold offset used to adjust a quality threshold of the candidate primary secondary cell based on an energy saving status of the candidate primary secondary cell;
a priority parameter of the candidate primary secondary cell;
a validity period of the conditional reconfiguration parameter of the candidate primary secondary cell; or
a sleep configuration parameter of the candidate primary secondary cell, including: sleep time information, a downlink reference signal configuration for sleep, and two random access resources or a WUS configuration for wake-up during network sleep.

In some embodiments, corresponding to the foregoing types of conditional reconfiguration parameters, the terminal may determine, in at least one of the following manners, whether the candidate cell is in the network sleep state:

The terminal initiates random access on a random access resource indicated by a conditional reconfiguration parameter corresponding to the candidate cell, and determines, if the random access fails, that the candidate cell is in the network sleep state. The "random access fails" herein may include the following cases: the random access fails for more than a specific quantity of times, or the random access is not completed within a given time.

The terminal determines, based on sleep time information corresponding to the candidate cell, whether the candidate cell is in the network sleep state, and determines, if the sleep time information indicates that the candidate cell is in the network sleep state, that the candidate cell is in the network sleep state. The sleep time information is an energy saving periodicity of the candidate cell, including an energy saving duration, a repetition periodicity, an energy saving start time or end time, or the like.

The terminal detects that a downlink reference signal of the candidate cell meets a downlink reference signal feature in the network sleep state, and determines that the candidate cell is in the network sleep state. The feature may be a sending location, frequency, or periodicity, carried information, or the like of the downlink reference signal.

The terminal determines, based on a sleep probability corresponding to the candidate cell, whether the candidate cell is in the network sleep state, for example, determines, if the sleep probability is greater than a specific threshold, whether the candidate cell is in the network sleep state.

The terminal determines, based on sleep indication information corresponding to the candidate cell, whether the candidate cell is in the network sleep state, and determines, if the sleep indication information indicates that the candidate cell is in the network sleep state, that the candidate cell is in the network sleep state.

In addition, the candidate cell in the network sleep state may further send an RRC reconfiguration message to the terminal via the candidate base station corresponding to the candidate cell, to notify the terminal that the candidate cell is in the network sleep state.

For ease of description, the foregoing step 301 is divided into the following substep 3011 and substep 3012 for description.

Substep 3011: Determine a selected cell from the at least one candidate cell based on a network energy saving status of the first cell and/or a network energy saving status of the at least one candidate cell, and apply a conditional reconfiguration parameter corresponding to the selected cell.

In this embodiment of this application, after determining the selected cell, the terminal needs to hand over to the selected cell. Correspondingly, the terminal applies the conditional reconfiguration parameter corresponding to the selected cell.

In some embodiments, in a scenario of handing over from one cell to another cell, when the first cell is a source cell and the candidate cell is a candidate target cell, the foregoing substep 3011 may include the following step 30111 (not shown in the figure).

Step 30111: Determine a selected cell from the at least one candidate target cell based on a network energy saving status of the source cell and/or a network energy saving status of the at least one candidate target cell, and apply a conditional reconfiguration parameter corresponding to the selected cell.

In some embodiments, in a scenario of adding a cell, when the first cell is a master cell and the candidate cell is a candidate primary secondary cell, the foregoing substep 3011 may include the following step 30112 (not shown in the figure).

Step 30112: Determine a selected cell from the at least one candidate target cell based on a network energy saving status of the at least one candidate target cell, and apply a conditional reconfiguration parameter corresponding to the selected cell.

Specific content of step 30111 and step 30112 is described in subsequent embodiments.

In an example, a CHO process is used as an example. The terminal is in a connected state, and the source cell currently serving is a cell 1. The terminal is configured with CHO configurations, including conditional reconfiguration parameters respectively corresponding to candidate target cells, namely, a cell 2, a cell 3, and a cell 4, such as RRC reconfiguration messages and handover execution conditions. The terminal selects, from the cell 2 to the cell 4 based on a network energy saving status of the cell 1 and/or network energy saving statuses of the cell 2 to the cell 4, a cell to be handed over to (that is, a selected cell), and performs a conditional handover operation on the selected cell, for example, selects the cell 3, and performs the conditional handover operation on the cell 3.

Substep 3012: Perform a first operation when a candidate cell of the at least one candidate cell is in a network sleep state, where the first operation includes at least one of the following:
deleting a conditional reconfiguration parameter corresponding to the candidate cell in the network sleep state;
skipping or delaying a conditional reconfiguration evaluation operation on the candidate cell in the network sleep state; or
indicating the candidate cell in the network sleep state to a network side.

The terminal may directly perform no conditional reconfiguration evaluation operation on the candidate cell in the network sleep state, or the terminal may perform the conditional reconfiguration evaluation operation only on a candidate cell that is not in the network sleep state, to indirectly perform no conditional reconfiguration evaluation operation on the candidate cell in the network sleep state.

The terminal may directly indicate the candidate cell in the network sleep state to the network side, or the terminal may indicate the candidate cell that is not in the network sleep state to the network side, to achieve indirect indication.

In an example, a CHO process is used as an example. The terminal is in a connected state, and the source cell currently serving is a cell 1. The terminal is configured with a CHO configuration, including a conditional reconfiguration parameter corresponding to a candidate target cell, namely, a cell 2, such as an RRC reconfiguration message and a handover execution condition. When the cell 2 is in the network sleep state, the terminal may perform at least one of the following: deleting the conditional reconfiguration parameter corresponding to the cell 2, skipping performing or delaying a conditional reconfiguration evaluation operation on the cell 2, and indicating, to the network side, that the cell 2 is in the network sleep state.

In an example, a CHO process is used as an example. The terminal is in a connected state, and the source cell currently serving is a cell 1. The terminal is configured with CHO configurations, including conditional reconfiguration parameters respectively corresponding to candidate target cells, namely, a cell 2, a cell 3, and a cell 4, such as RRC reconfiguration messages and handover execution conditions. When the cell 2 and the cell 4 are in the network sleep state, the terminal may perform at least one of the following: deleting the conditional reconfiguration parameters corresponding to the cell 2 and the cell 4, skipping or delaying conditional reconfiguration evaluation operations on the cell 2 and the cell 4, and indicating, to the network side, that the cell 2 and the cell 4 are in the network sleep state.

It can be learned from the foregoing embodiment that, in this embodiment, the terminal may choose to delete the conditional reconfiguration parameter corresponding to the candidate cell in the network sleep state. Because the conditional reconfiguration parameter corresponding to the candidate cell in the network sleep state is deleted, the terminal can be prevented from handing over to or adding the candidate cell in the network sleep state, and possible transmission interruption can be avoided, thereby ensuring service continuity of the terminal. The terminal may choose not to perform the conditional reconfiguration evaluation operation on the candidate cell in the network sleep state. Because the conditional reconfiguration evaluation operation on the candidate cell in the network sleep state is not performed, the candidate cell in the network sleep state is not selected by the terminal, so that service continuity of the terminal can be ensured. The terminal may choose to delay the conditional reconfiguration evaluation operation on the candidate cell in the network sleep state. Because the terminal chooses to delay the conditional reconfiguration evaluation operation on the candidate cell in the network sleep state, the candidate cell can have time to restore to an operating state from the network sleep state, thereby ensuring flexibility of handover or addition of the terminal. The terminal may notify the network side of information about the candidate cell in the network sleep state, so that the network side learns the state of the candidate cell in time and then performs corresponding processing. The terminal may determine a selected cell from one or more candidate cells based on the network energy saving status of the first cell and/or network energy saving statuses of the one or more candidate cells, and apply a conditional reconfiguration parameter corresponding to the selected cell. Because the terminal considers network energy saving information of the first cell and/or network energy saving information of the one or more candidate cells, the terminal can hand over to or add a suitable cell in a network energy saving scenario, thereby ensuring service continuity of the terminal and flexibility of handover or addition.

For ease of understanding, a solution of step 30111 is first described. In this embodiment of this application, the solution of step 30111 may include the following two cases: Case 1: Conditional reconfiguration triggered as the source cell is in the network sleep state. Case 2: Conditional reconfiguration triggered as a candidate target cell meets an execution condition.

For Case 1, in another embodiment provided in this application, when the source cell is in the network sleep state, a selected cell may be determined based on the network energy saving status of the source cell and network energy saving statuses of all candidate target cells. Correspondingly, step 30111 may include:
when the source cell is in the network sleep state, determining one or more triggered cells from the at least one candidate target cell, and determining any one of the one or more triggered cells as a selected cell.

In some embodiments, the triggered cell may be a candidate target cell that meets a first condition.

The first condition may include any one of the following:
the candidate target cell is not in the network sleep state;
the candidate target cell is not in the network sleep state and meets a second condition; or
the candidate target cell is in the network sleep state and meets a third condition.

The second condition may include at least one of the following:
the network has not configured a sleep probability of the candidate target cell, or the network has configured the sleep probability of the candidate target cell but the sleep probability is lower than a sleep probability threshold;
signal quality of the candidate target cell is higher than a first preset threshold;
a measurement object corresponding to the candidate target cell meets at least one of a conditional event A3, a conditional event A4, and a conditional event A5; or
the network has not configured a validity period of a conditional reconfiguration parameter of the candidate target cell, or the network has configured the validity period of the conditional reconfiguration parameter of the candidate target cell but the conditional reconfiguration parameter is still within the validity period.

The third condition may include at least one of the following:
the terminal is allowed to perform conditional reconfiguration during the network sleep state of the candidate target cell;
the signal quality of the candidate target cell is higher than a second preset threshold;
the measurement object corresponding to the candidate target cell meets at least one of the conditional event A3, the conditional event A4, and the conditional event A5; or
the network has not configured the validity period of the conditional reconfiguration parameter of the candidate target cell, or the network has configured the validity period of the conditional reconfiguration parameter of the candidate target cell but the conditional reconfiguration parameter is still within the validity period.

In this embodiment of this application, the signal quality of the candidate target cell may be represented by reference signal received power (Reference Signal Received Power, RSRP), a received signal strength indicator (Received Signal Strength Indicator, RSSI), reference signal received quality (Reference Signal Received Quality, RSRQ), or a signal to interference plus noise ratio (Signal to Interference plus Noise Ratio, SINR).

In this embodiment of this application, the first preset threshold and/or the second preset threshold are/is a quality threshold dedicated to use by the terminal to perform conditional reconfiguration evaluation on the candidate target cell when the source cell is in the network sleep state. The first preset threshold is dedicated to when the candidate target cell is not in the network sleep state, while the second preset threshold is dedicated to when the candidate target cell is in the network sleep state. The first preset threshold and the second preset threshold may be calculated based on a common quality threshold and quality threshold offsets. For example, the first preset threshold is the common threshold - an offset 1, and the second preset threshold is the common threshold + an offset 2, so that when the source cell is in the network sleep state, a threshold for the terminal to hand over to a candidate target cell that is not in the network sleep state is lowered, and a threshold for the terminal to hand over to a candidate target cell in the network sleep state is raised. The offset 1 and the offset 2 may be the same or different.

In this embodiment of this application, that the measurement object corresponding to the candidate target cell meets the conditional event A3 means that quality of the candidate target cell is higher than quality of the source cell by an offset. That the measurement object corresponding to the candidate target cell meets the conditional event A4 means that quality of the candidate target cell is higher than a specific threshold. That the measurement object corresponding to the candidate target cell meets the conditional event A5 means that quality of the source cell is lower than a specific threshold and quality of the candidate target cell is higher than a specific threshold. The quality may be signal quality.

It should be noted that, to be distinguished from one or more triggered cells in another embodiment, the one or more triggered cells in this embodiment of this application may also be referred to as a "first candidate cell set".

It can be learned that, in this embodiment of this application, when the source cell is in the network sleep state, the terminal determines a selected cell based on an actual requirement, which can cover various situations in wireless communication, to meet requirements for cell selection in different scenarios, thereby achieving high flexibility.

For Case 1, in another embodiment provided in this application, when the source cell is in the network sleep state, a selected cell may be determined based on a priority of the candidate target cell. Correspondingly, step 30111 may include:
when the source cell is in the network sleep state, determining a cell with a highest priority in the at least one candidate target cell as a selected cell.

A higher priority indicates a better operating state and better performance of the candidate target cell.

In some embodiments, the priority of the candidate target cell may be determined based on at least one of the following criteria: a first criterion, a second criterion, a third criterion, and a fourth criterion.

The first criterion is that a priority of the candidate target cell that is not in the network sleep state is higher than a priority of the candidate target cell in the network sleep state.

The second criterion is determining based on a priority parameter value of the candidate target cell.

The third criterion is determining based on a sleep probability of the candidate target cell. A smaller sleep probability indicates a higher priority of the candidate target cell.

The fourth criterion is determining based on signal quality of the candidate target cell. Higher signal quality of the candidate target cell indicates a higher priority of the candidate target cell.

A relationship between the foregoing criteria may be as follows: A candidate target cell meeting more of the foregoing criteria has a higher priority. Different criteria have different importance. To be specific, when there are a plurality of candidate target cells meeting the first criterion or there are no candidate target cell meeting the first criterion, a priority needs to be further determined based on the second criterion, and so on.

It can be learned that, in this embodiment of this application, a candidate target cell with a highest priority may be selected as a selected cell based on priorities of a plurality of candidate target cells. A higher priority of a candidate target cell indicates a better operating state of the candidate target cell, and better performance of the candidate target cell. Therefore, when the candidate target cell with the highest priority is selected as the selected cell, service continuity of the terminal during handover can be ensured.

For Case 1, in another embodiment provided in this application, when the source cell is in the network sleep state, the terminal may select one of the at least one candidate target cell. Correspondingly, step 30111 may include:
when the source cell is in the network sleep state, determining any one of the at least one candidate target cell as a selected cell.

It can be learned that, in this embodiment of this application, when the source cell is in the network sleep state, the terminal may freely select one from a plurality of candidate target cells as a selected cell, thereby achieving high flexibility.

For Case 2, in another embodiment provided in this application, when the source cell is not in the network sleep state, a selected cell may be determined based on network energy saving statuses of all candidate target cells. Correspondingly, step 30111 may include:
when the source cell is not in the network sleep state, determining one or more triggered cells from the at least one candidate target cell, and determining any one of the one or more triggered cells as a selected cell, where the triggered cell is a candidate target cell that meets a fourth condition. The fourth condition may include any one of the following:
the candidate target cell is not in the network sleep state and meets a predefined event;
the candidate target cell is not in the network sleep state and meets the predefined event and a fifth condition; or
the candidate target cell is in the network sleep state, signal quality of the candidate target cell is higher than a third preset threshold, and the candidate target cell meets a sixth condition.

The fifth condition may include at least one of the following:
the network has not configured a sleep probability of the candidate target cell, or the network has configured the sleep probability of the candidate target cell but the sleep probability is lower than a sleep probability threshold; or
the network has not configured a validity period of a conditional reconfiguration parameter of the candidate target cell, or the network has configured the validity period of the conditional reconfiguration parameter of the candidate target cell but the conditional reconfiguration parameter is still within the validity period.

The sixth condition may include at least one of the following:
the terminal is allowed to perform conditional reconfiguration during the network sleep state of the candidate target cell; or
the network has not configured the validity period of the conditional reconfiguration parameter of the candidate target cell, or the network has configured the validity period of the conditional reconfiguration parameter of the candidate target cell but the conditional reconfiguration parameter is still within the validity period.

The predefined event includes at least one of the following: a conditional event A3, a conditional event A4, a conditional event A5, a conditional event T1, and a conditional event D1.

In this embodiment of this application, that the measurement object corresponding to the candidate target cell meets the conditional event T1 means that time at which the terminal measures the candidate target cell exceeds a specific moment. That the measurement object corresponding to the candidate target cell meets the conditional event D1 means that a distance between a location of the terminal and the candidate target cell is within a given range.

It should be noted that, to be distinguished from one or more triggered cells in another embodiment, the one or more triggered cells in this embodiment of this application may be referred to as a "second candidate cell set".

It can be learned that, compared with the related art considering only the conditional event A3, the conditional event A4, the conditional event A5, the conditional event T1, and the conditional event D1 when determining a triggered cell, this embodiment of this application can define a new determining condition (that is, the fourth condition), so that a network energy saving factor is also considered.

For Case 2, in another embodiment provided in this application, when the source cell is not in the network sleep state, a selected cell may be determined based on a priority of the candidate target cell. Correspondingly, step 30111 may include:
when the source cell is not in the network sleep state, if there are at least two triggered cells in the at least one candidate target cell, determining a cell with a highest priority in the at least two triggered cells as a selected cell.

The triggered cell meets at least one of a conditional event A3, a conditional event A4, a conditional event A5, a conditional event T1, and a conditional event D1.

In some embodiments, the priority of the candidate target cell may be determined based on at least one of the following criteria: a first criterion, a second criterion, a third criterion, and a fourth criterion.

The first criterion is that a priority of the candidate target cell that is not in the network sleep state is higher than a priority of the candidate target cell in the network sleep state.

The second criterion is determining based on a priority parameter value of the candidate target cell.

The third criterion is determining based on a sleep probability of the candidate target cell. A smaller sleep probability indicates a higher priority of the candidate target cell.

The fourth criterion is determining based on signal quality of the candidate target cell. Higher signal quality of the candidate target cell indicates a higher priority of the candidate target cell.

A relationship between the foregoing criteria may be as follows: A candidate target cell meeting more of the foregoing criteria has a higher priority. Different criteria have different importance. To be specific, when there are a plurality of candidate target cells meeting the first criterion or there are no candidate target cell meeting the first criterion, a priority needs to be further determined based on the second criterion, and so on.

It should be noted that, to be distinguished from one or more triggered cells in another embodiment, the one or more triggered cells in this embodiment of this application may be referred to as a "third candidate cell set".

It can be learned that for candidate target cells meeting old conditions (the conditional event A3, the conditional event A4, the conditional event A5, the conditional event T1, and the conditional event D1), that is, one or more triggered cells in the related art, one of the one or more triggered cells needs to be selected based on terminal implementation in the related art. In this embodiment of this application, the one or more triggered cells may be prioritized and sorted based on network energy saving statuses, and a cell with a highest priority (that is, a best operating state) is selected as a selected cell based on a sorting result, so that service continuity of the terminal during handover can be ensured.

A solution of step 30112 is described below. Because a process of determining a selected cell based on a candidate cell in a CPA procedure is similar to a process of determining a selected cell based on a candidate cell in a CHO or CPC procedure, details are not described again.

In another embodiment provided in this application, a selected cell may be determined based on network energy saving statuses of all candidate primary secondary cells. Correspondingly, step 30112 may include:
determining one or more triggered cells from the at least one candidate primary secondary cell, and determining any one of the one or more triggered cells as a selected cell.

In some embodiments, the triggered cell may be a candidate primary secondary cell that meets a seventh condition.

The seventh condition may include any one of the following:
the candidate primary secondary cell is not in the network sleep state;
the candidate primary secondary cell is not in the network sleep state and meets an eighth condition; or
the candidate primary secondary cell is in the network sleep state and meets a ninth condition.

The eighth condition may include at least one of the following:
the network has not configured a sleep probability of the candidate primary secondary cell, or the network has configured the sleep probability of the candidate primary secondary cell but the sleep probability is lower than a sleep probability threshold;
signal quality of the candidate primary secondary cell is higher than a fourth preset threshold;
a measurement object corresponding to the candidate primary secondary cell meets at least one of a conditional event A3, a conditional event A4, and a conditional event A5; or
the network has not configured a validity period of a conditional reconfiguration parameter of the candidate primary secondary cell, or the network has configured the validity period of the conditional reconfiguration parameter of the candidate primary secondary cell but the conditional reconfiguration parameter is still within the validity period.

The ninth condition may include at least one of the following:
the terminal is allowed to perform conditional reconfiguration during the network sleep state of the candidate primary secondary cell;
the signal quality of the candidate primary secondary cell is higher than a fifth preset threshold;
the measurement object corresponding to the candidate primary secondary cell meets at least one of the conditional event A3, the conditional event A4, and the conditional event A5; or
the network has not configured the validity period of the conditional reconfiguration parameter of the candidate primary secondary cell, or the network has configured the validity period of the conditional reconfiguration parameter of the candidate primary secondary cell but the conditional reconfiguration parameter is still within the validity period.

In this embodiment of this application, that the measurement object corresponding to the candidate primary secondary cell meets the conditional event A3 means that quality of the candidate primary secondary cell is higher than quality of the master cell by an offset. The measurement object corresponding to the candidate primary secondary cell meets the conditional event A4 means that quality of the candidate primary secondary cell is higher than a specific threshold. The measurement object corresponding to the candidate primary secondary cell meets the conditional event A5 means that quality of the master cell is lower than a specific threshold and quality of the candidate primary secondary cell is higher than a specific threshold. The quality may be signal quality.

It should be noted that, to be distinguished from one or more triggered cells in another embodiment, the one or more triggered cells in this embodiment of this application may also be referred to as a "fourth candidate cell set".

It can be learned that, in this embodiment of this application, the terminal determines a selected cell based on an actual requirement, which can cover various situations in wireless communication, to meet requirements for cell selection in different scenarios, thereby achieving high flexibility.

In another embodiment provided in this application, a selected cell may be determined based on a priority of the candidate primary secondary cell. Correspondingly, step 30112 may include:
determining a cell with a highest priority in the at least one candidate primary secondary cell as a selected cell.

A higher priority indicates a better operating state and better performance of the candidate primary secondary cell.

In some embodiments, the priority of the candidate primary secondary cell may be determined based on at least one of the following criteria: a fifth criterion, a sixth criterion, a seventh criterion, and an eighth criterion.

The fifth criterion is that a priority of the candidate primary secondary cell that is not in the network sleep state is higher than a priority of the candidate primary secondary cell in the network sleep state.

The sixth criterion is determining based on a priority parameter value of the candidate primary secondary cell.

The seventh criterion is determining based on a sleep probability of the candidate primary secondary cell. A smaller sleep probability indicates a higher priority of the candidate primary secondary cell.

The eighth criterion is determining based on signal quality of the candidate primary secondary cell. Higher signal quality of the candidate primary secondary cell indicates a higher priority of the candidate primary secondary cell.

A relationship between the foregoing criteria may be as follows: A candidate primary secondary cell meeting more of the foregoing criteria has a higher priority. Different criteria have different importance. To be specific, when there are a plurality of candidate primary secondary cells meeting the fifth criterion or there are no candidate primary secondary cell meeting the fifth criterion, a priority needs to be further determined based on the sixth criterion, and so on.

It can be learned that, in this embodiment of this application, a candidate primary secondary cell with a highest priority may be selected as a selected cell based on priorities of a plurality of candidate primary secondary cells. A higher priority of a candidate primary secondary cell indicates a better operating state of the candidate primary secondary cell, and better performance of the candidate primary secondary cell. Therefore, when the candidate primary secondary cell with the highest priority is selected as the selected cell, service continuity of the terminal can be ensured.

In another embodiment provided in this application, when an addition condition is met, a selected cell may be determined based on a network energy saving status of a candidate primary secondary cell that meets the condition. Correspondingly, step 30112 may include:
determining one or more triggered cells from the at least one candidate primary secondary cell, and determining any one of the one or more triggered cells as a selected cell, where the triggered cell is a candidate primary secondary cell that meets a tenth condition. The tenth condition may include any one of the following:
the candidate primary secondary cell is not in the network sleep state and meets a predefined event;
the candidate primary secondary cell is not in the network sleep state and meets the predefined event and a fifth condition; or
the candidate primary secondary cell is in the network sleep state, signal quality of the candidate primary secondary cell is higher than a sixth preset threshold, and the candidate primary secondary cell meets a sixth condition.

The eleventh condition may include at least one of the following:
the network has not configured a sleep probability of the candidate primary secondary cell, or the network has configured the sleep probability of the candidate primary secondary cell but the sleep probability is lower than a sleep probability threshold; or
the network has not configured a validity period of a conditional reconfiguration parameter of the candidate primary secondary cell, or the network has configured the validity period of the conditional reconfiguration parameter of the candidate primary secondary cell but the conditional reconfiguration parameter is still within the validity period.

The twelfth condition may include at least one of the following:
the terminal is allowed to perform conditional reconfiguration during the network sleep state of the candidate primary secondary cell; or
the network has not configured the validity period of the conditional reconfiguration parameter of the candidate primary secondary cell, or the network has configured the validity period of the conditional reconfiguration parameter of the candidate primary secondary cell but the conditional reconfiguration parameter is still within the validity period.

The predefined event includes at least one of the following: a conditional event A3, a conditional event A4, a conditional event A5, a conditional event T1, and a conditional event D1.

In this embodiment of this application, that the measurement object corresponding to the candidate primary secondary cell meets the conditional event T1 means that time at which the terminal measures the candidate primary secondary cell exceeds a specific moment. That the measurement object corresponding to the candidate primary secondary cell meets the conditional event D1 means that a distance between a location of the terminal and the candidate primary secondary cell is within a given range.

It should be noted that, to be distinguished from one or more triggered cells in another embodiment, the one or more triggered cells in this embodiment of this application may be referred to as a "fifth candidate cell set".

It can be learned that, compared with the related art considering only the conditional event A3, the conditional event A4, the conditional event A5, the conditional event T1, and the conditional event D1 when determining a triggered cell, this embodiment of this application can define a new determining condition (that is, the fourth condition), so that a network energy saving factor is also considered.

In another embodiment provided in this application, when an addition condition is met, a selected cell may be determined based on a priority of the candidate primary secondary cell. Correspondingly, step 30112 may include:
if there are at least two triggered cells in the at least one candidate primary secondary cell, determining a cell with a highest priority in the at least two triggered cells as a selected cell.

The triggered cell meets at least one of a conditional event A3, a conditional event A4, a conditional event A5, a conditional event T1, and a conditional event D1.

In some embodiments, the priority of the candidate primary secondary cell may be determined based on at least one of the following criteria: a fifth criterion, a sixth criterion, a seventh criterion, and an eighth criterion.

The fifth criterion is that a priority of the candidate primary secondary cell that is not in the network sleep state is higher than a priority of the candidate primary secondary cell in the network sleep state.

The sixth criterion is determining based on a priority parameter value of the candidate primary secondary cell.

The seventh criterion is determining based on a sleep probability of the candidate primary secondary cell. A smaller sleep probability indicates a higher priority of the candidate primary secondary cell.

The eighth criterion is determining based on signal quality of the candidate primary secondary cell. Higher signal quality of the candidate primary secondary cell indicates a higher priority of the candidate primary secondary cell.

A relationship between the foregoing criteria may be as follows: A candidate primary secondary cell meeting more of the foregoing criteria has a higher priority. Different criteria have different importance. To be specific, when there are a plurality of candidate primary secondary cells meeting the fifth criterion or there are no candidate primary secondary cell meeting the fifth criterion, a priority needs to be further determined based on the sixth criterion, and so on.

It should be noted that, to be distinguished from one or more triggered cells in another embodiment, the one or more triggered cells in this embodiment of this application may be referred to as a "sixth candidate cell set".

It can be learned that for candidate primary secondary cells meeting old conditions (the conditional event A3, the conditional event A4, the conditional event A5, the conditional event T1, and the conditional event D1), that is, one or more triggered cells in the related art, one of the one or more triggered cells needs to be selected based on terminal implementation in the related art. In this embodiment of this application, these one or more triggered cells may be prioritized and sorted based on network energy saving statuses, and a cell with a highest priority (that is, a best operating state) is selected as a selected cell based on a sorting result, so that service continuity of the terminal during handover can be ensured.

In addition, it may be understood that, when the first cell is a source cell and the candidate cell is a candidate target cell, a selected cell may alternatively be determined based only on the network energy saving status of the at least one candidate target cell, and a determining manner may be similar to that in CPA.

In another embodiment provided in this application, when applying the conditional reconfiguration parameter corresponding to the selected cell, the terminal may consider a state of the selected cell, and for different states, different manners may be used:
when the selected cell is not in the network sleep state, initiating random access on a first random access resource indicated by the conditional reconfiguration parameter corresponding to the selected cell; or
when the selected cell is in the network sleep state, sending a wake-up signal to the selected cell or initiating random access on a second random access resource.

It should be noted that, a wake-up signal sending configuration and the second random access resource may be carried when the conditional reconfiguration parameter is configured, or may be derived in another manner, for example, obtained based on a location of a dedicated reference signal in the network sleep state and a time offset. The time offset may be agreed on in a protocol or configured by the network side.

It can be learned that, in this embodiment of this application, when handing over to the selected cell, the terminal may consider a state of the selected cell, and may use different manners for different states, thereby achieving high flexibility.

In some embodiments, when the first cell is a source cell and the candidate cell is a candidate target cell, after the terminal determines the candidate target cell in the network sleep state as a selected cell, a more reliable approach is that the terminal continues to monitor scheduling of the source cell and/or maintains a configuration of the source cell, and stops monitoring the scheduling of the source cell and/or deletes the configuration of the source cell after the terminal successfully wakes up the selected cell or random accesses succeeds, to reduce resource overheads and power consumption of the terminal.

In some embodiments, when the first cell is a source cell and the candidate cell is a candidate target cell, a second operation is performed when the terminal fails to wake up the selected cell or random access fails, where the second operation includes at least one of the following: applying a configuration parameter of the source cell or a conditional reconfiguration parameter of one of other candidate target cells; or declaring a radio link failure.

In some embodiments, after the radio link failure is declared, failure information of the selected cell may be reported or a connection reestablishment procedure may be initiated. When reporting the failure information of the selected cell, if the terminal operates in a dual connectivity mode, the terminal may perform reporting through an MCG failure information procedure or an SCG failure information procedure. If the terminal operates in a single connectivity mode, the terminal may initiate an RRC connection reestablishment procedure.

It can be learned that, in this embodiment of this application, when the terminal fails to hand over to the selected cell, the terminal may attempt to hand over to another cell, to ensure service continuity of the terminal.

The mobility control method provided in embodiments of this application may be performed by a mobility control apparatus. In embodiments of this application, the mobility control apparatus provided in embodiments of this application is described by using an example in which the mobility control apparatus performs the mobility control method.

The mobility control apparatus provided in embodiments of this application is described below.

FIG. 4 is a structural block diagram of a mobility control apparatus according to an embodiment of this application, used in a terminal. As shown in FIG. 4, the mobility control apparatus 400 may include a first processing module 401.

The first processing module 401 is configured to perform one of the following when the terminal is configured with a first cell and at least one candidate cell:
determining a selected cell from the at least one candidate cell based on a network energy saving status of the first cell and/or a network energy saving status of the at least one candidate cell, and applying a conditional reconfiguration parameter corresponding to the selected cell; or
performing a first operation when a candidate cell of the at least one candidate cell is in a network sleep state, where the first operation includes at least one of the following:
deleting a conditional reconfiguration parameter corresponding to the candidate cell in the network sleep state;
skipping or delaying a conditional reconfiguration evaluation operation on the candidate cell in the network sleep state; or
indicating the candidate cell in the network sleep state to a network side.

When the first cell is a source cell, the candidate cell is a candidate target cell, and the conditional reconfiguration parameter includes a conditional handover CHO configuration parameter and/or a conditional primary secondary cell change CPC configuration parameter. When the first cell is a master cell, the candidate cell is a candidate primary secondary cell, and the conditional reconfiguration parameter includes a conditional primary secondary cell addition CPA configuration parameter.

It can be learned from the foregoing embodiment that, in this embodiment, the terminal may choose to delete the conditional reconfiguration parameter corresponding to the candidate cell in the network sleep state. Because the conditional reconfiguration parameter corresponding to the candidate cell in the network sleep state is deleted, the terminal can be prevented from handing over to or adding the candidate cell in the network sleep state, and possible transmission interruption can be avoided, thereby ensuring service continuity of the terminal. The terminal may choose not to perform the conditional reconfiguration evaluation operation on the candidate cell in the network sleep state. Because the conditional reconfiguration evaluation operation on the candidate cell in the network sleep state is not performed, the candidate cell in the network sleep state is not selected by the terminal, so that service continuity of the terminal can be ensured. The terminal may choose to delay the conditional reconfiguration evaluation operation on the candidate cell in the network sleep state. Because the terminal chooses to delay the conditional reconfiguration evaluation operation on the candidate cell in the network sleep state, the candidate cell can have time to restore to an operating state from the network sleep state, thereby ensuring flexibility of handover or addition of the terminal. The terminal may notify the network side of information about the candidate cell in the network sleep state, so that the network side learns the state of the candidate cell in time and then performs corresponding processing. The terminal may determine a selected cell from one or more candidate cells based on the network energy saving status of the first cell and/or network energy saving statuses of the one or more candidate cells, and apply a conditional reconfiguration parameter corresponding to the selected cell. Because the terminal considers network energy saving information of the first cell and/or network energy saving information of the one or more candidate cells, the terminal can hand over to or add a suitable cell in a network energy saving scenario, thereby ensuring service continuity of the terminal and flexibility of handover or addition.

Optionally, in an embodiment, when the first cell is a source cell and the candidate cell is a candidate target cell, the first processing module 401 may include one of the following:
a first selection submodule, configured to: when the source cell is in the network sleep state, determine one or more triggered cells from the at least one candidate target cell, and determine any one of the one or more triggered cells as a selected cell; or
a second selection submodule, configured to: when the source cell is in the network sleep state, determine a cell with a highest priority in the at least one candidate target cell as a selected cell.

Optionally, in an embodiment, the triggered cell is a candidate target cell that meets a first condition.

The first condition includes any one of the following:
the candidate target cell is not in the network sleep state;
the candidate target cell is not in the network sleep state and meets a second condition; or
the candidate target cell is in the network sleep state and meets a third condition.

The second condition includes at least one of the following:
the network has not configured a sleep probability of the candidate target cell, or the network has configured the sleep probability of the candidate target cell but the sleep probability is lower than a sleep probability threshold;
signal quality of the candidate target cell is higher than a first preset threshold;
a measurement object corresponding to the candidate target cell meets at least one of a conditional event A3, a conditional event A4, and a conditional event A5; or
the network has not configured a validity period of a conditional reconfiguration parameter of the candidate target cell, or the network has configured the validity period of the conditional reconfiguration parameter of the candidate target cell but the conditional reconfiguration parameter is still within the validity period.

The third condition includes at least one of the following:
the terminal is allowed to perform conditional reconfiguration during the network sleep state of the candidate target cell;
the signal quality of the candidate target cell is higher than a second preset threshold;
the measurement object corresponding to the candidate target cell meets at least one of the conditional event A3, the conditional event A4, and the conditional event A5; or
the network has not configured the validity period of the conditional reconfiguration parameter of the candidate target cell, or the network has configured the validity period of the conditional reconfiguration parameter of the candidate target cell but the conditional reconfiguration parameter is still within the validity period.

Optionally, in an embodiment, the first preset threshold and/or the second preset threshold are/is a quality threshold dedicated to use by the terminal to perform conditional reconfiguration evaluation on the candidate target cell when the source cell is in the network sleep state.

Optionally, in an embodiment, when the first cell is a source cell and the candidate cell is a candidate target cell, the first processing module 401 may include:
a third selection submodule, configured to: when the source cell is in the network sleep state, determine any one of the at least one candidate target cell as a selected cell.

Optionally, in an embodiment, when the first cell is a source cell and the candidate cell is a candidate target cell, the first processing module 401 may include:
a fourth selection submodule, configured to: when the source cell is not in the network sleep state, determine one or more triggered cells from the at least one candidate target cell, and determine any one of the one or more triggered cells as a selected cell, where the triggered cell is a candidate target cell that meets a fourth condition.

The fourth condition includes any one of the following:
the candidate target cell is not in the network sleep state and meets a predefined event;
the candidate target cell is not in the network sleep state and meets the predefined event and a fifth condition; or
the candidate target cell is in the network sleep state, signal quality of the candidate target cell is higher than a third preset threshold, and the candidate target cell meets a sixth condition.

The fifth condition includes at least one of the following:
the network has not configured a sleep probability of the candidate target cell, or the network has configured the sleep probability of the candidate target cell but the sleep probability is lower than a sleep probability threshold; or
the network has not configured a validity period of a conditional reconfiguration parameter of the candidate target cell, or the network has configured the validity period of the conditional reconfiguration parameter of the candidate target cell but the conditional reconfiguration parameter is still within the validity period.

The sixth condition includes at least one of the following:
the terminal is allowed to perform conditional reconfiguration during the network sleep state of the candidate target cell; or
the network has not configured the validity period of the conditional reconfiguration parameter of the candidate target cell, or the network has configured the validity period of the conditional reconfiguration parameter of the candidate target cell but the conditional reconfiguration parameter is still within the validity period.

The predefined event includes at least one of the following: a conditional event A3, a conditional event A4, a conditional event A5, a conditional event T1, and a conditional event D1.

Optionally, in an embodiment, when the first cell is a source cell and the candidate cell is a candidate target cell, the first processing module 401 may include:
a fifth selection submodule, configured to: when the source cell is not in the network sleep state, if there are at least two triggered cells in the at least one candidate target cell, determine a cell with a highest priority in the at least two triggered cells as a selected cell.

The triggered cell meets at least one of a conditional event A3, a conditional event A4, a conditional event A5, a conditional event T1, and a conditional event D1.

Optionally, in an embodiment, a priority of the candidate target cell is determined based on at least one of the following criteria: a first criterion, a second criterion, a third criterion, and a fourth criterion.

The first criterion is that a priority of the candidate target cell that is not in the network sleep state is higher than a priority of the candidate target cell in the network sleep state.

The second criterion is determining based on a priority parameter value of the candidate target cell.

The third criterion is determining based on a sleep probability of the candidate target cell. A smaller sleep probability indicates a higher priority of the candidate target cell.

The fourth criterion is determining based on signal quality of the candidate target cell. Higher signal quality of the candidate target cell indicates a higher priority of the candidate target cell.

Optionally, in an embodiment, the first processing module 401 may include:
a first reconfiguration submodule, configured to: when the selected cell is not in the network sleep state, initiate random access on a first random access resource indicated by the conditional reconfiguration parameter corresponding to the selected cell; and
a second reconfiguration submodule, configured to: when the selected cell is in the network sleep state, send a wake-up signal to the selected cell or initiate random access on a second random access resource.

Optionally, in an embodiment, when the first cell is a source cell and the candidate cell is a candidate target cell, the mobility control apparatus 400 may further include:
a second processing module, configured to: after the terminal successfully wakes up the selected cell or the random access succeeds, stop monitoring scheduling of the source cell and/or delete a configuration of the source cell.

Optionally, in an embodiment, when the first cell is a source cell and the candidate cell is a candidate target cell, the mobility control apparatus 400 may further include:
a third processing module, configured to perform a second operation when the terminal fails to wake up the selected cell or the random access fails, where the second operation includes at least one of the following:
applying a configuration parameter of the source cell or a conditional reconfiguration parameter of one of other candidate target cells; or
declaring a radio link failure.

Optionally, in an embodiment, the mobility control apparatus 400 may further include:
a fourth processing module, configured to: after the radio link failure is declared, report failure information of the selected cell or initiate a connection reestablishment procedure.

Optionally, in an embodiment, the terminal determines, in at least one of the following manners, whether the candidate cell is in the network sleep state:
the terminal initiates random access on a random access resource indicated by a conditional reconfiguration parameter corresponding to the candidate cell, and determines, if the random access fails, that the candidate cell is in the network sleep state;
the terminal determines, based on sleep time information corresponding to the candidate cell, whether the candidate cell is in the network sleep state, and determines, if the sleep time information indicates that the candidate cell is in the network sleep state, that the candidate cell is in the network sleep state;
the terminal detects that a downlink reference signal of the candidate cell meets a downlink reference signal feature in the network sleep state, and determines that the candidate cell is in the network sleep state;
the terminal determines, based on a sleep probability corresponding to the candidate cell, whether the candidate cell is in the network sleep state; or
the terminal determines, based on sleep indication information corresponding to the candidate cell, whether the candidate cell is in the network sleep state.

FIG. 5 is a structural block diagram of another mobility control apparatus according to an embodiment of this application, used in a first base station. As shown in FIG. 5, the mobility control apparatus 500 may include a first sending module 501 and a first receiving module 502.

The first sending module 501 is configured to send a first request to at least one candidate base station. The first request is used to request to configure a candidate cell for a terminal.

The first receiving module 502 is configured to receive a first response from the at least one candidate base station. The first response is used to respond to the first request.

The first response carries first configuration information indicating that the first request is accepted and the first configuration information includes a conditional reconfiguration parameter corresponding to the candidate cell, or the first response carries second configuration information indicating that the first request is rejected and the second configuration information indicates that a rejection cause is related to network sleep. The conditional reconfiguration parameter includes a network energy saving parameter related to a network energy saving status of the candidate cell.

When the candidate base station is a candidate target base station, the candidate cell is a candidate target cell, and the conditional reconfiguration parameter includes a CHO configuration parameter and/or a CPC configuration parameter. When the candidate base station is a candidate secondary node, the candidate cell is a candidate primary secondary cell, and the conditional reconfiguration parameter includes a CPC configuration parameter and/or a CPA configuration parameter.

It can be learned from the foregoing embodiment that, in this embodiment, in a case that a network energy saving function is introduced, when the first base station requests the candidate base station to allocate a related resource for conditional reconfiguration to the terminal, the candidate base station may allocate, to the terminal, a related resource and a configuration parameter related to network energy saving, so that the terminal may select, with reference to the configuration parameter related to network energy saving, a cell to be handed over to or added. Alternatively, the candidate base station may reject allocation of a related resource based on consideration of network energy saving, to prevent the terminal from conditionally handing over to or adding a cell in a network sleep state.

Optionally, in an embodiment, the mobility control apparatus 500 may further include:
a second sending module, configured to: when the first response carries the first configuration information indicating that the first request is accepted, and the first configuration information includes the conditional reconfiguration parameter corresponding to the candidate cell, send a first reconfiguration message to the terminal, where the first reconfiguration message carries the following configuration information: the conditional reconfiguration parameter corresponding to the candidate cell, and an execution condition for determining to perform conditional reconfiguration.

Optionally, in an embodiment, the mobility control apparatus 500 may further include:
a fifth processing module, configured to perform at least one of the following when determining that at least one candidate cell is in a network sleep state:
sending a second reconfiguration message to the terminal, where the second reconfiguration message indicates the terminal to delete a conditional reconfiguration parameter corresponding to the candidate cell in the network sleep state;
deleting the conditional reconfiguration parameter corresponding to the candidate cell in the network sleep state; or
requesting the candidate base station to wake up the candidate target cell in the network sleep state.

Optionally, in an embodiment, the mobility control apparatus 500 may further include:
a determining module, configured to receive indication information from the terminal, and determine, based on the indication information, that at least one candidate cell is in the network sleep state; or receive a sleep request or sleep indication information from a candidate base station corresponding to a candidate cell in the network sleep state, and determine, based on the sleep request or the sleep indication information, that at least one candidate cell is in the network sleep state.

Optionally, in an embodiment, the conditional reconfiguration parameter includes at least one of the following:
a sleep probability of the candidate cell;
a sleep probability threshold;
information indicating whether the terminal is allowed to perform conditional reconfiguration during network sleep of the candidate cell;
a quality threshold offset used to adjust a quality threshold of the candidate cell based on an energy saving status of the candidate cell;
a priority parameter of the candidate cell;
a validity period of the conditional reconfiguration parameter of the candidate cell; or
a sleep configuration parameter of the candidate cell, including: sleep time information, a downlink reference signal configuration for sleep, and two random access resources or a WUS configuration for wake-up during network sleep.

FIG. 6 is a structural block diagram of still another mobility control apparatus according to an embodiment of this application, used in a candidate target base station. As shown in FIG. 6, the mobility control apparatus 600 may include a second receiving module 601 and a third sending module 602.

The second receiving module 601 is configured to receive a first request from a first base station. The first request is used to request to configure a candidate cell for a terminal.

The third sending module 602 is configured to send a first response to the first base station. The first response is used to respond to the first request, and the first response carries first configuration information indicating that the first request is accepted and the first configuration information includes a conditional reconfiguration parameter corresponding to the candidate cell, or the first response carries second configuration information indicating that the first request is rejected and the second configuration information indicates that a rejection cause is related to network sleep. The conditional reconfiguration parameter includes a network energy saving parameter related to a network energy saving status of the candidate cell.

When the first base station is a source base station, the candidate cell is a candidate target cell, and the conditional reconfiguration parameter includes a CHO configuration parameter and/or a CPC configuration parameter. When the first base station is a mater node, the candidate cell is a candidate primary secondary cell, and the conditional reconfiguration parameter includes a CPC configuration parameter and/or a CPA configuration parameter.

It can be learned from the foregoing embodiment that, in this embodiment, in a case that a network energy saving function is introduced, when the first base station requests the candidate base station to allocate a related resource for conditional reconfiguration to the terminal, the candidate base station may allocate, to the terminal, a related resource and a configuration parameter related to network energy saving, so that the terminal may select, with reference to the configuration parameter related to network energy saving, a cell to be handed over to or added. Alternatively, the candidate base station may reject allocation of a related resource based on consideration of network energy saving, to prevent the terminal from conditionally handing over to or adding a cell in a network sleep state.

The mobility control apparatus in embodiments of this application may be an electronic device, for example, an electronic device with an operating system, or may be a component in an electronic device, for example, an integrated circuit or a chip. The electronic device may be a terminal or another device other than the terminal. For example, the terminal may include but is not limited to the foregoing listed types of the terminal, and the another device may be a server or a network attached storage (Network Attached Storage, NAS). This is not specifically limited in embodiments of this application.

The mobility control apparatus provided in embodiments of this application can implement processes implemented in the method embodiment in FIG. 2 or FIG. 3, and the same technical effects can be achieved. To avoid repetition, details are not described herein again.

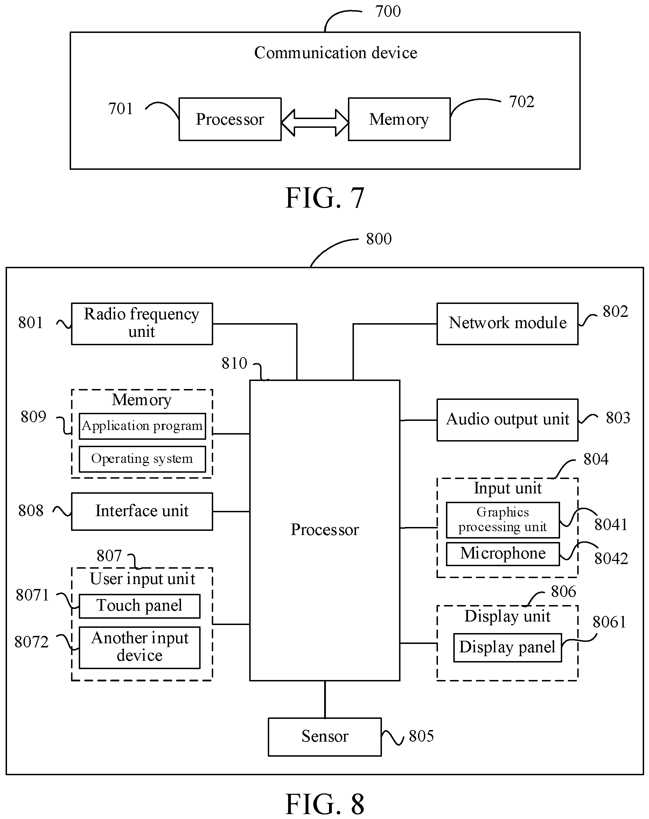

Optionally, as shown in FIG. 7, an embodiment of this application further provides a communication device 700, including a processor 701 and a memory 702. The memory 702 stores a program or instructions executable on the processor 701. For example, when the communication device 700 is a terminal, when the program or instructions are executed by the processor 701, steps of the foregoing mobility control method embodiment are implemented, and the same technical effects can be achieved. When the communication device 700 is a network side device, when the program or instructions are executed by the processor 701, steps of the foregoing mobility control method embodiment are implemented, and the same technical effects can be achieved. To avoid repetition, details are not described herein again.

FIG. 8 is a diagram of a hardware structure of a terminal according to embodiments of this application.

As shown in FIG. 8, the terminal 800 includes but is not limited to at least a part of components of a radio frequency unit 801, a network module 802, an audio output unit 803, an input unit 804, a sensor 805, a display unit 806, a user input unit 807, an interface unit 808, a memory 809, a processor 810, and the like.

A person skilled in the art may understand that the terminal 800 may further include a power supply (such as a battery) for supplying power to the components. The power supply may be logically connected to the processor 810 by using a power management system, to implement functions such as charging, discharging, and power consumption management by using the power management system. The terminal structure shown in FIG. 8 does not constitute a limitation on the terminal, and the terminal may include more or fewer components than shown those shown in the figure, or combine some components, or have a different component arrangement. Details are not described herein.

It should be understood that in this embodiment of this application, the input unit 804 may include a graphics processing unit (Graphics Processing Unit, GPU) 8041 and a microphone 8042. The graphics processing unit 8041 processes image data of a static picture or a video that is obtained by an image capture apparatus (such as a camera) in a video capture mode or an image capture mode. The display unit 806 may include a display panel 8061, and the display panel 8061 may be configured in a form of a liquid crystal display, an organic light emitting diode, or the like. The user input unit 807 includes at least one of a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a switch button), a track ball, a mouse, or a joystick. Details are not described herein.

In this embodiment of this application, after receiving downlink data from a network side device, the radio frequency unit 801 may transmit the downlink data to the processor 810 for processing. In addition, the radio frequency unit 801 may send uplink data to the network side device. Generally, the radio frequency unit 801 includes but is not limited to an antenna, an amplifier, a transceiver, a coupler, a low noise amplifier, a duplexer, and the like.

The memory 809 may be configured to store a software program or instructions and various data. The memory 809 may mainly include a first storage area for storing a program or instructions and a second storage area for storing data. The first storage area may store an operating system, an application program or instructions required for at least one function (such as a sound playing function or an image playing function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DRRAM). The memory 809 in this embodiment of this application includes but is not limited to these and any other memory of a suitable type.

The processor 810 may include one or more processing units. Optionally, the processor 810 integrates an application processor and a modem processor. The application processor mainly processes operations related to an operating system, a user interface, an application program, and the like. The modem processor mainly processes a wireless communication signal, such as a baseband processor. It may be understood that the modem processor may alternatively not be integrated into the processor 810.

The processor 810 is configured to perform one of the following when the terminal is configured with a first cell and at least one candidate cell:
determining a selected cell from the at least one candidate cell based on a network energy saving status of the first cell and/or a network energy saving status of the at least one candidate cell, and applying a conditional reconfiguration parameter corresponding to the selected cell; or
performing a first operation when a candidate cell of the at least one candidate cell is in a network sleep state, where the first operation includes at least one of the following:
   deleting a conditional reconfiguration parameter corresponding to the candidate cell in the network sleep state;
   skipping or delaying a conditional reconfiguration evaluation operation on the candidate cell in the network sleep state; or
   indicating the candidate cell in the network sleep state to a network side.

When the first cell is a source cell, the candidate cell is a candidate target cell, and the conditional reconfiguration parameter includes a conditional handover CHO configuration parameter and/or a conditional primary secondary cell change CPC configuration parameter. When the first cell is a master cell, the candidate cell is a candidate primary secondary cell, and the conditional reconfiguration parameter includes a conditional primary secondary cell addition CPA configuration parameter.

It can be learned that, in this embodiment of this application, the terminal may choose to delete the conditional reconfiguration parameter corresponding to the candidate cell in the network sleep state. Because the conditional reconfiguration parameter corresponding to the candidate cell in the network sleep state is deleted, the terminal can be prevented from handing over to or adding the candidate cell in the network sleep state, and possible transmission interruption can be avoided, thereby ensuring service continuity of the terminal. The terminal may choose not to perform the conditional reconfiguration evaluation operation on the candidate cell in the network sleep state. Because the conditional reconfiguration evaluation operation on the candidate cell in the network sleep state is not performed, the candidate cell in the network sleep state is not selected by the terminal, so that service continuity of the terminal can be ensured. The terminal may choose to delay the conditional reconfiguration evaluation operation on the candidate cell in the network sleep state. Because the terminal chooses to delay the conditional reconfiguration evaluation operation on the candidate cell in the network sleep state, the candidate cell can have time to restore to an operating state from the network sleep state, thereby ensuring flexibility of handover or addition of the terminal. The terminal may notify the network side of information about the candidate cell in the network sleep state, so that the network side learns the state of the candidate cell in time and then performs corresponding processing. The terminal may determine a selected cell from one or more candidate cells based on the network energy saving status of the first cell and/or network energy saving statuses of the one or more candidate cells, and apply a conditional reconfiguration parameter corresponding to the selected cell. Because the terminal considers network energy saving information of the first cell and/or network energy saving information of the one or more candidate cells, the terminal can hand over to or add a suitable cell in a network energy saving scenario, thereby ensuring service continuity of the terminal and flexibility of handover or addition.

Optionally, in an embodiment, when the first cell is a source cell and the candidate cell is a candidate target cell, the processor 810 is further configured to perform one of the following:
when the source cell is in the network sleep state, determining one or more triggered cells from the at least one candidate target cell, and determining any one of the one or more triggered cells as a selected cell; or
when the source cell is in the network sleep state, determining a cell with a highest priority in the at least one candidate target cell as a selected cell.

Optionally, in an embodiment, the triggered cell is a candidate target cell that meets a first condition.

The first condition includes any one of the following:
the candidate target cell is not in the network sleep state;
the candidate target cell is not in the network sleep state and meets a second condition; or
the candidate target cell is in the network sleep state and meets a third condition.

The second condition includes at least one of the following:
the network has not configured a sleep probability of the candidate target cell, or the network has configured the sleep probability of the candidate target cell but the sleep probability is lower than a sleep probability threshold;
signal quality of the candidate target cell is higher than a first preset threshold;
a measurement object corresponding to the candidate target cell meets at least one of a conditional event A3, a conditional event A4, and a conditional event A5; or
the network has not configured a validity period of a conditional reconfiguration parameter of the candidate target cell, or the network has configured the validity period of the conditional reconfiguration parameter of the candidate target cell but the conditional reconfiguration parameter is still within the validity period.

The third condition includes at least one of the following:
the terminal is allowed to perform conditional reconfiguration during the network sleep state of the candidate target cell;
the signal quality of the candidate target cell is higher than a second preset threshold;
the measurement object corresponding to the candidate target cell meets at least one of the conditional event A3, the conditional event A4, and the conditional event A5; or
the network has not configured the validity period of the conditional reconfiguration parameter of the candidate target cell, or the network has configured the validity period of the conditional reconfiguration parameter of the candidate target cell but the conditional reconfiguration parameter is still within the validity period.

Optionally, in an embodiment, the first preset threshold and/or the second preset threshold are/is a quality threshold dedicated to use by the terminal to perform conditional reconfiguration evaluation on the candidate target cell when the source cell is in the network sleep state.

Optionally, in an embodiment, when the first cell is a source cell and the candidate cell is a candidate target cell, the processor 810 is further configured to: when the source cell is in the network sleep state, determine any one of the at least one candidate target cell as a selected cell.

Optionally, in an embodiment, when the first cell is a source cell and the candidate cell is a candidate target cell, the processor 810 is further configured to: when the source cell is not in the network sleep state, determine one or more triggered cells from the at least one candidate target cell, and determine any one of the one or more triggered cells as a selected cell, where the triggered cell is a candidate target cell that meets a fourth condition.

The fourth condition includes any one of the following:
the candidate target cell is not in the network sleep state and meets a predefined event;
the candidate target cell is not in the network sleep state and meets the predefined event and a fifth condition; or
the candidate target cell is in the network sleep state, signal quality of the candidate target cell is higher than a third preset threshold, and the candidate target cell meets a sixth condition.

The fifth condition includes at least one of the following:
the network has not configured a sleep probability of the candidate target cell, or the network has configured the sleep probability of the candidate target cell but the sleep probability is lower than a sleep probability threshold; or
the network has not configured a validity period of a conditional reconfiguration parameter of the candidate target cell, or the network has configured the validity period of the conditional reconfiguration parameter of the candidate target cell but the conditional reconfiguration parameter is still within the validity period.

The sixth condition includes at least one of the following:
the terminal is allowed to perform conditional reconfiguration during the network sleep state of the candidate target cell; or
the network has not configured the validity period of the conditional reconfiguration parameter of the candidate target cell, or the network has configured the validity period of the conditional reconfiguration parameter of the candidate target cell but the conditional reconfiguration parameter is still within the validity period.

The predefined event includes at least one of the following: a conditional event A3, a conditional event A4, a conditional event A5, a conditional event T1, and a conditional event D1.

Optionally, in an embodiment, when the first cell is a source cell and the candidate cell is a candidate target cell, the processor 810 is further configured to: when the source cell is not in the network sleep state, if there are at least two triggered cells in the at least one candidate target cell, determine a cell with a highest priority in the at least two triggered cells as a selected cell.

The triggered cell meets at least one of a conditional event A3, a conditional event A4, a conditional event A5, a conditional event T1, and a conditional event D1.

Optionally, in an embodiment, a priority of the candidate target cell is determined based on at least one of the following criteria: a first criterion, a second criterion, a third criterion, and a fourth criterion.

The first criterion is that a priority of the candidate target cell that is not in the network sleep state is higher than a priority of the candidate target cell in the network sleep state.

The second criterion is determining based on a priority parameter value of the candidate target cell.

The third criterion is determining based on a sleep probability of the candidate target cell. A smaller sleep probability indicates a higher priority of the candidate target cell.

The fourth criterion is determining based on signal quality of the candidate target cell. Higher signal quality of the candidate target cell indicates a higher priority of the candidate target cell.

Optionally, in an embodiment, the processor 810 is further configured to: when the selected cell is not in the network sleep state, initiate random access on a first random access resource indicated by the conditional reconfiguration parameter corresponding to the selected cell; or when the selected cell is in the network sleep state, send a wake-up signal to the selected cell or initiate random access on a second random access resource.

Optionally, in an embodiment, when the first cell is a source cell and the candidate cell is a candidate target cell, the processor 810 is further configured to: after the terminal successfully wakes up the selected cell or the random access succeeds, stop monitoring scheduling of the source cell and/or delete a configuration of the source cell.

Optionally, in an embodiment, when the first cell is a source cell and the candidate cell is a candidate target cell, the processor 810 is further configured to: perform a second operation when the terminal fails to wake up the selected cell or the random access fails, where the second operation includes at least one of the following:
applying a configuration parameter of the source cell or a conditional reconfiguration parameter of one of other candidate target cells; or
declaring a radio link failure.

Optionally, in an embodiment, the processor 810 is further configured to: after declaring the radio link failure, report failure information of the selected cell or initiate a connection reestablishment procedure.

Optionally, in an embodiment, the processor 810 is further configured to perform at least one of the following:
initiating random access on a random access resource indicated by a conditional reconfiguration parameter corresponding to the candidate cell, and determining, if the random access fails, that the candidate cell is in the network sleep state;
determining, based on sleep time information corresponding to the candidate cell, whether the candidate cell is in the network sleep state, and determining, if the sleep time information indicates that the candidate cell is in the network sleep state, that the candidate cell is in the network sleep state;
detecting that a downlink reference signal of the candidate cell meets a downlink reference signal feature in the network sleep state, and determining that the candidate cell is in the network sleep state;
determining, based on a sleep probability corresponding to the candidate cell, whether the candidate cell is in the network sleep state; or
the terminal determining, based on sleep indication information corresponding to the candidate cell, whether the candidate cell is in the network sleep state.

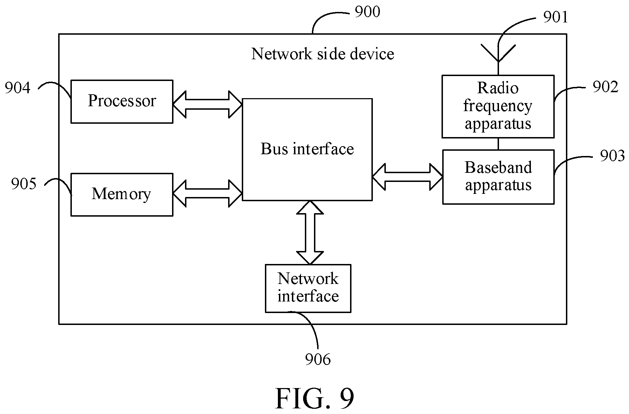

FIG. 9 is a diagram of a hardware structure of a network side device according to embodiments of this application.

As shown in FIG. 9, the network side device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information via the antenna 901, and sends the received information to the baseband apparatus 903 for processing. In a downlink direction, the baseband apparatus 903 processes information to be sent, and sends the information to the radio frequency apparatus 902, and the radio frequency apparatus 902 processes the received information and then sends the information via the antenna 901.

The method performed by the network side device in the foregoing embodiment may be implemented in the baseband apparatus 903. The baseband apparatus 903 includes a baseband processor.

The baseband apparatus 903 may include, for example, at least one baseband board, and a plurality of chips are disposed on the baseband board. As shown in FIG. 9, one of the chips is, for example, the baseband processor, which is connected to the memory 905 through a bus interface, to invoke a program in the memory 905 to perform a network device operation described in the foregoing method embodiment.

The network side device may further include a network interface 906. The interface is, for example, a common public radio interface (Common Public Radio Interface, CPRI).

Specifically, the network side device 900 in this embodiment of this application further includes a program or instructions stored in the memory 905 and executable on the processor 904. The processor 904 invokes the program or instructions in the memory 905 to perform the method performed by the modules shown in FIG. 5 or FIG. 6 and achieve the same technical effects. To avoid repetition, details are not described herein again.

An embodiment of this application further provides a readable storage medium. The readable storage medium stores a program or instructions. When the program or instructions are executed by a processor, processes of the foregoing mobility control method embodiment are implemented, and the same technical effects can be achieved. To avoid repetition, details are not described herein again.

The processor is the processor in the terminal in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions, to implement processes of the foregoing mobility control method embodiment, and the same technical effects can be achieved. To avoid repetition, details are not described herein again.

It should be understood that the chip in this embodiment of this application may also be referred to as a system-on-a-chip, a system chip, a chip system, a system on chip, or the like.

An embodiment of this application further provides a computer program/program product. The computer program/program product is stored in a storage medium. The computer program/program product is executed by at least one processor to implement processes of the foregoing mobility control method embodiment, and the same technical effects can be achieved. To avoid repetition, details are not described herein again.

An embodiment of this application further provides a mobility control system, including: a terminal and a network side device. The terminal may be configured to perform steps of the mobility control method described above. The network side device may be configured to perform steps of the mobility control method described above.

It should be noted that, the terms "include", "comprise", and any variants thereof in the specification are intended to cover a non-exclusive inclusion. Therefore, a process, method, object, or apparatus that includes a series of elements not only includes such elements, but also includes other elements not specified expressly, or may include inherent elements of the process, method, object, or apparatus. Unless otherwise specified, an element defined by "include a/an..." does not exclude other same elements existing in the process, method, object, or apparatus that includes the element. Moreover, it should be noted that the scope of the method and apparatus in embodiments of this application is not limited to executing the functions in the order shown or discussed, but may include executing the functions in a substantially concurrent manner or in a reverse order depending on the related functions. For example, the method described may be performed in an order different from that described, and various steps may be further added, omitted, or combined. In addition, features described with reference to some examples may be combined in other examples.

Based on the foregoing descriptions of the embodiments, a person skilled in the art may clearly understand that the methods of the foregoing embodiments may be implemented by software in addition to a necessary universal hardware platform or by hardware. In most circumstances, the former is an example implementation. Based on such understanding, the technical solutions of this application essentially, or the part contributing to a conventional technology may be implemented in a form of a computer software product. The computer software product may be stored in a storage medium (such as a ROM/RAM, a magnetic disk, or an optical disc), and include several instructions for instructing a terminal (which may be a mobile phone, a computer, a server, an air conditioner, a network device, or the like) to perform the methods according to embodiments of this application.

Embodiments of this application have been described above with reference to the accompanying drawings, but this application is not limited to the specific embodiments, and the specific embodiments are merely examples rather than limitative. A person of ordinary skill in the art may make various variations under the teaching of this application without departing from the essence of this application and the protection scope of the claims, and such variations shall all fall within the protection scope of this application.

## Claims

1. A mobility control method, comprising:
performing, by a terminal, one of the following when the terminal is configured with a first cell and at least one candidate cell:
determining, by the terminal, a selected cell from the at least one candidate cell based on a network energy saving status of the first cell and/or a network energy saving status of the at least one candidate cell, and applying a conditional reconfiguration parameter corresponding to the selected cell; or
performing, by the terminal, a first operation when a candidate cell of the at least one candidate cell is in a network sleep state, wherein the first operation comprises at least one of the following:
deleting a conditional reconfiguration parameter corresponding to the candidate cell in the network sleep state;
skipping or delaying a conditional reconfiguration evaluation operation on the candidate cell in the network sleep state; or
indicating the candidate cell in the network sleep state to a network side, wherein
when the first cell is a source cell, the candidate cell is a candidate target cell, and the conditional reconfiguration parameter comprises a conditional handover CHO configuration parameter and/or a conditional primary secondary cell change CPC configuration parameter; or when the first cell is a master cell, the candidate cell is a candidate primary secondary cell, and the conditional reconfiguration parameter comprises a conditional primary secondary cell addition CPA configuration parameter.

2. The method according to claim 1, wherein when the first cell is the source cell and the candidate cell is the candidate target cell, the determining, by the terminal, a selected cell from the at least one candidate cell based on a network energy saving status of the first cell and/or a network energy saving status of the at least one candidate cell comprises one of the following:
when the source cell is in the network sleep state, determining, by the terminal, one or more triggered cells from the at least one candidate target cell, and determining any one of the one or more triggered cells as the selected cell; or
when the source cell is in the network sleep state, determining, by the terminal, a cell with a highest priority in the at least one candidate target cell as the selected cell.

3. The method according to claim 2, wherein the triggered cell is a candidate target cell that meets a first condition, wherein
the first condition comprises any one of the following:
the candidate target cell is not in the network sleep state;
the candidate target cell is not in the network sleep state and meets a second condition; or
the candidate target cell is in the network sleep state and meets a third condition;
wherein the second condition comprises at least one of the following:
the network has not configured a sleep probability of the candidate target cell, or the network has configured the sleep probability of the candidate target cell but the sleep probability is lower than a sleep probability threshold;
signal quality of the candidate target cell is higher than a first preset threshold;
a measurement object corresponding to the candidate target cell meets at least one of a conditional event A3, a conditional event A4, and a conditional event A5; or
the network has not configured a validity period of a conditional reconfiguration parameter of the candidate target cell, or the network has configured the validity period of the conditional reconfiguration parameter of the candidate target cell but the conditional reconfiguration parameter is still within the validity period; and
wherein the third condition comprises at least one of the following:
the terminal is allowed to perform conditional reconfiguration during the network sleep state of the candidate target cell;
the signal quality of the candidate target cell is higher than a second preset threshold;
the measurement object corresponding to the candidate target cell meets at least one of the conditional event A3, the conditional event A4, and the conditional event A5; or
the network has not configured the validity period of the conditional reconfiguration parameter of the candidate target cell, or the network has configured the validity period of the conditional reconfiguration parameter of the candidate target cell but the conditional reconfiguration parameter is still within the validity period.

4. The method according to claim 3, wherein the first preset threshold and/or the second preset threshold are/is a quality threshold dedicated to use by the terminal to perform conditional reconfiguration evaluation on the candidate target cell when the source cell is in the network sleep state.

5. The method according to claim 1, wherein when the first cell is the source cell and the candidate cell is the candidate target cell, the determining, by the terminal, a selected cell from the at least one candidate cell based on a network energy saving status of the first cell and/or a network energy saving status of the at least one candidate cell comprises:
when the source cell is in the network sleep state, determining, by the terminal, any one of the at least one candidate target cell as the selected cell.

6. The method according to claim 1, wherein when the first cell is the source cell and the candidate cell is the candidate target cell, the determining, by the terminal, a selected cell from the at least one candidate cell based on a network energy saving status of the first cell and/or a network energy saving status of the at least one candidate cell comprises:
when the source cell is not in the network sleep state, determining, by the terminal, one or more triggered cells from the at least one candidate target cell, and determining any one of the one or more triggered cells as the selected cell, wherein the triggered cell is a candidate target cell that meets a fourth condition, wherein
the fourth condition comprises any one of the following:
the candidate target cell is not in the network sleep state and meets a predefined event;
the candidate target cell is not in the network sleep state and meets the predefined event and a fifth condition; or
the candidate target cell is in the network sleep state, signal quality of the candidate target cell is higher than a third preset threshold, and the candidate target cell meets a sixth condition;
wherein the fifth condition comprises at least one of the following:
the network has not configured a sleep probability of the candidate target cell, or the network has configured the sleep probability of the candidate target cell but the sleep probability is lower than a sleep probability threshold; or
the network has not configured a validity period of a conditional reconfiguration parameter of the candidate target cell, or the network has configured the validity period of the conditional reconfiguration parameter of the candidate target cell but the conditional reconfiguration parameter is still within the validity period;
wherein the sixth condition comprises at least one of the following:
the terminal is allowed to perform conditional reconfiguration during the network sleep state of the candidate target cell; or
the network has not configured the validity period of the conditional reconfiguration parameter of the candidate target cell, or the network has configured the validity period of the conditional reconfiguration parameter of the candidate target cell but the conditional reconfiguration parameter is still within the validity period; and
wherein the predefined event comprises at least one of the following: a conditional event A3, a conditional event A4, a conditional event A5, a conditional event T1, and a conditional event D1.

7. The method according to claim 1, wherein when the first cell is the source cell and the candidate cell is the candidate target cell, the determining, by the terminal, a selected cell from the at least one candidate cell based on a network energy saving status of the first cell and/or a network energy saving status of the at least one candidate cell comprises:
when the source cell is not in the network sleep state, if there are at least two triggered cells in the at least one candidate target cell, determining, by the terminal, a cell with a highest priority in the at least two triggered cells as the selected cell, wherein
the triggered cell meets at least one of a conditional event A3, a conditional event A4, a conditional event A5, a conditional event T1, and a conditional event D1.

8. The method according to claim 2 or 7, wherein a priority of the candidate target cell is determined based on at least one of the following criteria: a first criterion, a second criterion, a third criterion, and a fourth criterion, wherein
the first criterion is that a priority of the candidate target cell that is not in the network sleep state is higher than a priority of the candidate target cell in the network sleep state;
the second criterion is determining based on a priority parameter value of the candidate target cell;
the third criterion is determining based on a sleep probability of the candidate target cell, wherein a smaller sleep probability indicates a higher priority of the candidate target cell; and
the fourth criterion is determining based on signal quality of the candidate target cell, wherein higher signal quality of the candidate target cell indicates a higher priority of the candidate target cell.

9. The method according to claim 1, wherein the applying, by the terminal, a conditional reconfiguration parameter corresponding to the selected cell comprises:
when the selected cell is not in the network sleep state, initiating, by the terminal, random access on a first random access resource indicated by the conditional reconfiguration parameter corresponding to the selected cell; or
when the selected cell is in the network sleep state, sending, by the terminal, a wake-up signal to the selected cell or initiating random access on a second random access resource.

10. The method according to claim 9, wherein when the first cell is the source cell and the candidate cell is the candidate target cell, the method further comprises:
after the terminal successfully wakes up the selected cell or the random access succeeds, stopping, by the terminal, monitoring scheduling of the source cell, and/or deleting, by the terminal, a configuration of the source cell.

11. The method according to claim 9, wherein when the first cell is the source cell and the candidate cell is the candidate target cell, the method further comprises:
performing, by the terminal, a second operation when the terminal fails to wake up the selected cell or the random access fails, wherein the second operation comprises at least one of the following:
applying a configuration parameter of the source cell or a conditional reconfiguration parameter of one of other candidate target cells; or
declaring a radio link failure.

12. The method according to claim 11, wherein the method further comprises:
after declaring the radio link failure, reporting, by the terminal, failure information of the selected cell or initiating a connection reestablishment procedure.

13. The method according to claim 1, wherein the terminal determines, in at least one of the following manners, whether the candidate cell is in the network sleep state:
initiating, by the terminal, random access on a random access resource indicated by a conditional reconfiguration parameter corresponding to the candidate cell, and determining, if the random access fails, that the candidate cell is in the network sleep state;
determining, by the terminal based on sleep time information corresponding to the candidate cell, whether the candidate cell is in the network sleep state, and determining, if the sleep time information indicates that the candidate cell is in the network sleep state, that the candidate cell is in the network sleep state;
detecting, by the terminal, that a downlink reference signal of the candidate cell meets a downlink reference signal feature in the network sleep state, and determining that the candidate cell is in the network sleep state;
determining, by the terminal based on a sleep probability corresponding to the candidate cell, whether the candidate cell is in the network sleep state; or
determining, by the terminal based on sleep indication information corresponding to the candidate cell, whether the candidate cell is in the network sleep state.

14. A mobility control apparatus, comprising:
a first processing module, configured to perform one of the following when a terminal is configured with a first cell and at least one candidate cell:
determining a selected cell from the at least one candidate cell based on a network energy saving status of the first cell and/or a network energy saving status of the at least one candidate cell, and applying a conditional reconfiguration parameter corresponding to the selected cell; or
performing a first operation when a candidate cell of the at least one candidate cell is in a network sleep state, wherein the first operation comprises at least one of the following:
deleting a conditional reconfiguration parameter corresponding to the candidate cell in the network sleep state;
skipping or delaying a conditional reconfiguration evaluation operation on the candidate cell in the network sleep state; or
indicating the candidate cell in the network sleep state to a network side, wherein
when the first cell is a source cell, the candidate cell is a candidate target cell, and the conditional reconfiguration parameter comprises a CHO configuration parameter and/or a CPC configuration parameter; or when the first cell is a master cell, the candidate cell is a candidate primary secondary cell, and the conditional reconfiguration parameter comprises a CPA configuration parameter.

15. The apparatus according to claim 14, wherein when the first cell is the source cell and the candidate cell is the candidate target cell, the first processing module comprises one of the following:
a first selection submodule, configured to: when the source cell is in the network sleep state, determine one or more triggered cells from the at least one candidate target cell, and determine any one of the one or more triggered cells as the selected cell; or
a second selection submodule, configured to: when the source cell is in the network sleep state, determine a cell with a highest priority in the at least one candidate target cell as the selected cell.

16. The apparatus according to claim 15, wherein the triggered cell is a candidate target cell that meets a first condition, wherein
the first condition comprises any one of the following:
the candidate target cell is not in the network sleep state;
the candidate target cell is not in the network sleep state and meets a second condition; or
the candidate target cell is in the network sleep state and meets a third condition;
wherein the second condition comprises at least one of the following:
the network has not configured a sleep probability of the candidate target cell, or the network has configured the sleep probability of the candidate target cell but the sleep probability is lower than a sleep probability threshold; or
signal quality of the candidate target cell is higher than a first preset threshold;
a measurement object corresponding to the candidate target cell meets at least one of a conditional event A3, a conditional event A4, and a conditional event A5; or
the network has not configured a validity period of a conditional reconfiguration parameter of the candidate target cell, or the network has configured the validity period of the conditional reconfiguration parameter of the candidate target cell but the conditional reconfiguration parameter is still within the validity period; and
wherein the third condition comprises at least one of the following:
the terminal is allowed to perform conditional reconfiguration during the network sleep state of the candidate target cell;
the signal quality of the candidate target cell is higher than a second preset threshold;
the measurement object corresponding to the candidate target cell meets at least one of the conditional event A3, the conditional event A4, and the conditional event A5; or
the network has not configured the validity period of the conditional reconfiguration parameter of the candidate target cell, or the network has configured the validity period of the conditional reconfiguration parameter of the candidate target cell but the conditional reconfiguration parameter is still within the validity period.

17. The apparatus according to claim 16, wherein the first preset threshold and/or the second preset threshold are/is a quality threshold dedicated to use by the terminal to perform conditional reconfiguration evaluation on the candidate target cell when the source cell is in the network sleep state.

18. The apparatus according to claim 14, wherein when the first cell is the source cell and the candidate cell is the candidate target cell, the first processing module comprises:
a third selection submodule, configured to: when the source cell is in the network sleep state, determine any one of the at least one candidate target cell as the selected cell.

19. The apparatus according to claim 14, wherein when the first cell is the source cell and the candidate cell is the candidate target cell, the first processing module comprises:
a fourth selection submodule, configured to: when the source cell is not in the network sleep state, determine one or more triggered cells from the at least one candidate target cell, and determine any one of the one or more triggered cells as the selected cell, wherein the triggered cell is a candidate target cell that meets a fourth condition, wherein
the fourth condition comprises any one of the following:
the candidate target cell is not in the network sleep state and meets a predefined event;
the candidate target cell is not in the network sleep state and meets the predefined event and a fifth condition; or
the candidate target cell is in the network sleep state, signal quality of the candidate target cell is higher than a third preset threshold, and the candidate target cell meets a sixth condition;
wherein the fifth condition comprises at least one of the following:
the network has not configured a sleep probability of the candidate target cell, or the network has configured the sleep probability of the candidate target cell but the sleep probability is lower than a sleep probability threshold; or
the network has not configured a validity period of a conditional reconfiguration parameter of the candidate target cell, or the network has configured the validity period of the conditional reconfiguration parameter of the candidate target cell but the conditional reconfiguration parameter is still within the validity period;
wherein the sixth condition comprises at least one of the following:
the terminal is allowed to perform conditional reconfiguration during the network sleep state of the candidate target cell; or
the network has not configured the validity period of the conditional reconfiguration parameter of the candidate target cell, or the network has configured the validity period of the conditional reconfiguration parameter of the candidate target cell but the conditional reconfiguration parameter is still within the validity period; and
wherein the predefined event comprises at least one of the following: a conditional event A3, a conditional event A4, a conditional event A5, a conditional event T1, and a conditional event D1.

20. The apparatus according to claim 14, wherein when the first cell is the source cell and the candidate cell is the candidate target cell, the first processing module comprises:
a fifth selection submodule, configured to: when the source cell is not in the network sleep state, if there are at least two triggered cells in the at least one candidate target cell, determine a cell with a highest priority in the at least two triggered cells as the selected cell, wherein
the triggered cell meets at least one of a conditional event A3, a conditional event A4, a conditional event A5, a conditional event T1, and a conditional event D1.

21. The apparatus according to claim 15 or 20, wherein a priority of the candidate target cell is determined based on at least one of the following criteria: a first criterion, a second criterion, a third criterion, and a fourth criterion, wherein
the first criterion is that a priority of the candidate target cell that is not in the network sleep state is higher than a priority of the candidate target cell in the network sleep state;
the second criterion is determining based on a priority parameter value of the candidate target cell;
the third criterion is determining based on a sleep probability of the candidate target cell, wherein a smaller sleep probability indicates a higher priority of the candidate target cell; and
the fourth criterion is determining based on signal quality of the candidate target cell, wherein higher signal quality of the candidate target cell indicates a higher priority of the candidate target cell.

22. The apparatus according to claim 14, wherein the first processing module comprises:
a first reconfiguration submodule, configured to: when the selected cell is not in the network sleep state, initiate random access on a first random access resource indicated by the conditional reconfiguration parameter corresponding to the selected cell; and
a second reconfiguration submodule, configured to: when the selected cell is in the network sleep state, send a wake-up signal to the selected cell or initiate random access on a second random access resource.

23. The apparatus according to claim 22, wherein when the first cell is the source cell and the candidate cell is the candidate target cell, the apparatus further comprises:
a second processing module, configured to: after the terminal successfully wakes up the selected cell or the random access succeeds, stop monitoring scheduling of the source cell and/or delete a configuration of the source cell.

24. The apparatus according to claim 22, wherein when the first cell is the source cell and the candidate cell is the candidate target cell, the apparatus further comprises:
a third processing module, configured to perform a second operation when the terminal fails to wake up the selected cell or the random access fails, wherein the second operation comprises at least one of the following:
applying a configuration parameter of the source cell or a conditional reconfiguration parameter of one of other candidate target cells; or
declaring a radio link failure.

25. The apparatus according to claim 24, wherein the apparatus further comprises:
a fourth processing module, configured to: after the radio link failure is declared, report failure information of the selected cell or initiate a connection reestablishment procedure.

26. The apparatus according to claim 14, wherein the terminal determines, in at least one of the following manners, whether the candidate cell is in the network sleep state:
initiating, by the terminal, random access on a random access resource indicated by a conditional reconfiguration parameter corresponding to the candidate cell, and determining, if the random access fails, that the candidate cell is in the network sleep state;
determining, by the terminal based on sleep time information corresponding to the candidate cell, whether the candidate cell is in the network sleep state, and determining, if the sleep time information indicates that the candidate cell is in the network sleep state, that the candidate cell is in the network sleep state;
detecting, by the terminal, that a downlink reference signal of the candidate cell meets a downlink reference signal feature in the network sleep state, and determining that the candidate cell is in the network sleep state;
determining, by the terminal based on a sleep probability corresponding to the candidate cell, whether the candidate cell is in the network sleep state; or
determining, by the terminal based on sleep indication information corresponding to the candidate cell, whether the candidate cell is in the network sleep state.

27. A mobility control method, comprising:
sending, by a first base station, a first request to at least one candidate base station, wherein the first request is used to request to configure a candidate cell for a terminal; and
receiving, by the first base station, a first response from the at least one candidate base station, wherein the first response is used to respond to the first request, wherein
the first response carries first configuration information indicating that the first request is accepted and the first configuration information comprises a conditional reconfiguration parameter corresponding to the candidate cell, or the first response carries second configuration information indicating that the first request is rejected and the second configuration information indicates that a rejection cause is related to network sleep, wherein the conditional reconfiguration parameter comprises a network energy saving parameter related to a network energy saving status of the candidate cell; and
when the first base station is a source base station, the candidate base station is a candidate target base station, the candidate cell is a candidate target cell, and the conditional reconfiguration parameter comprises a CHO configuration parameter and/or a CPC configuration parameter; or when the first base station is a mater node, the candidate base station is a candidate secondary node, the candidate cell is a candidate primary secondary cell, and the conditional reconfiguration parameter comprises a CPC configuration parameter and/or a CPA configuration parameter.

28. The method according to claim 27, wherein when the first response carries the first configuration information indicating that the first request is accepted, and the first configuration information comprises the conditional reconfiguration parameter corresponding to the candidate cell, after the receiving, by the first base station, a first response from the candidate base station, the method further comprises:
sending, by the first base station, a first reconfiguration message to the terminal, wherein the first reconfiguration message carries the following configuration information: the conditional reconfiguration parameter corresponding to the candidate cell, and an execution condition for determining to perform conditional reconfiguration.

29. The method according to claim 28, wherein after the sending, by the first base station, a first reconfiguration message to the terminal, the method further comprises:
performing, by the first base station, at least one of the following when determining that at least one candidate cell is in a network sleep state:
sending, by the first base station, a second reconfiguration message to the terminal, wherein the second reconfiguration message indicates the terminal to delete a conditional reconfiguration parameter corresponding to the candidate cell in the network sleep state;
deleting, by the first base station, the conditional reconfiguration parameter corresponding to the candidate cell in the network sleep state; or
requesting, by the first base station, the candidate base station to wake up the candidate cell in the network sleep state.

30. The method according to claim 29, wherein before the performing, by the first base station, at least one of the following when determining that at least one candidate cell is in a network sleep state, the method further comprises:
receiving, by the first base station, indication information from the terminal, and determining, based on the indication information, that at least one candidate cell is in the network sleep state; or
receiving, by the first base station, a sleep request or sleep indication information from a candidate base station corresponding to a candidate cell in the network sleep state, and determining, based on the sleep request or the sleep indication information, that at least one candidate cell is in the network sleep state.

31. The method according to claim 27, wherein the conditional reconfiguration parameter comprises at least one of the following:
a sleep probability of the candidate cell;
a sleep probability threshold;
information indicating whether the terminal is allowed to perform conditional reconfiguration during network sleep of the candidate cell;
a quality threshold offset used to adjust a quality threshold of the candidate cell based on an energy saving status of the candidate cell;
a priority parameter of the candidate cell;
a validity period of the conditional reconfiguration parameter of the candidate cell; or
a sleep configuration parameter of the candidate cell, comprising: sleep time information, a downlink reference signal configuration for sleep, and two random access resources or a WUS configuration for wake-up during network sleep.

32. A mobility control apparatus, comprising:
a first sending module, configured to send a first request to at least one candidate base station, wherein the first request is used to request to configure a candidate cell for a terminal; and
a first receiving module, configured to receive a first response from the at least one candidate base station, wherein the first response is used to respond to the first request, wherein
the first response carries first configuration information indicating that the first request is accepted and the first configuration information comprises a conditional reconfiguration parameter corresponding to the candidate cell, or the first response carries second configuration information indicating that the first request is rejected and the second configuration information indicates that a rejection cause is related to network sleep, wherein the conditional reconfiguration parameter comprises a network energy saving parameter related to a network energy saving status of the candidate cell; and
when the candidate base station is a candidate target base station, the candidate cell is a candidate target cell, and the conditional reconfiguration parameter comprises a CHO configuration parameter and/or a CPC configuration parameter; or when the candidate base station is a candidate secondary node, the candidate cell is a candidate primary secondary cell, and the conditional reconfiguration parameter comprises a CPC configuration parameter and/or a CPA configuration parameter.

33. The apparatus according to claim 32, wherein the apparatus further comprises:
a second sending module, configured to: when the first response carries the first configuration information indicating that the first request is accepted, and the first configuration information comprises the conditional reconfiguration parameter corresponding to the candidate cell, send a first reconfiguration message to the terminal, wherein the first reconfiguration message carries the following configuration information: the conditional reconfiguration parameter corresponding to the candidate cell, and an execution condition for determining to perform conditional reconfiguration.

34. The apparatus according to claim 33, wherein the apparatus further comprises:
a fifth processing module, configured to perform at least one of the following when determining that at least one candidate cell is in a network sleep state:
sending a second reconfiguration message to the terminal, wherein the second reconfiguration message indicates the terminal to delete a conditional reconfiguration parameter corresponding to the candidate cell in the network sleep state;
deleting the conditional reconfiguration parameter corresponding to the candidate cell in the network sleep state; or
requesting the candidate base station to wake up the candidate target cell in the network sleep state.

35. The apparatus according to claim 34, wherein the apparatus further comprises:
a determining module, configured to receive indication information from the terminal, and determine, based on the indication information, that at least one candidate cell is in the network sleep state; or
receive a sleep request or sleep indication information from a candidate base station corresponding to a candidate cell in the network sleep state, and determine, based on the sleep request or the sleep indication information, that at least one candidate cell is in the network sleep state.

36. The apparatus according to claim 32, wherein the conditional reconfiguration parameter comprises at least one of the following:
a sleep probability of the candidate cell;
a sleep probability threshold;
information indicating whether the terminal is allowed to perform conditional reconfiguration during network sleep of the candidate cell;
a quality threshold offset used to adjust a quality threshold of the candidate cell based on an energy saving status of the candidate cell;
a priority parameter of the candidate cell;
a validity period of the conditional reconfiguration parameter of the candidate cell; or
a sleep configuration parameter of the candidate cell, comprising: sleep time information, a downlink reference signal configuration for sleep, and two random access resources or a WUS configuration for wake-up during network sleep.

37. A mobility control method, comprising:
receiving, by a candidate base station, a first request from a first base station, wherein the first request is used to request to configure a candidate cell for a terminal; and
sending, by the candidate base station, a first response to the first base station, wherein the first response is used to respond to the first request, and the first response carries first configuration information indicating that the first request is accepted and the first configuration information comprises a conditional reconfiguration parameter corresponding to the candidate cell, or the first response carries second configuration information indicating that the first request is rejected and the second configuration information indicates that a rejection cause is related to network sleep, wherein the conditional reconfiguration parameter comprises a network energy saving parameter related to a network energy saving status of the candidate cell, wherein
when the first base station is a source base station, the candidate base station is a candidate target base station, the candidate cell is a candidate target cell, and the conditional reconfiguration parameter comprises a CHO configuration parameter and/or a CPC configuration parameter; or when the first base station is a mater node, the candidate base station is a candidate secondary node, the candidate cell is a candidate primary secondary cell, and the conditional reconfiguration parameter comprises a CPC configuration parameter and/or a CPA configuration parameter.

38. A mobility control apparatus, comprising:
a second receiving module, configured to receive a first request from a first base station, wherein the first request is used to request to configure a candidate cell for a terminal; and
a third sending module, configured to send a first response to the first base station, wherein the first response is used to respond to the first request, and the first response carries first configuration information indicating that the first request is accepted and the first configuration information comprises a conditional reconfiguration parameter corresponding to the candidate cell, or the first response carries second configuration information indicating that the first request is rejected and the second configuration information indicates that a rejection cause is related to network sleep, wherein the conditional reconfiguration parameter comprises a network energy saving parameter related to a network energy saving status of the candidate cell, wherein
when the first base station is a source base station, the candidate cell is a candidate target cell, and the conditional reconfiguration parameter comprises a CHO configuration parameter and/or a CPC configuration parameter; or when the first base station is a mater node, the candidate cell is a candidate primary secondary cell, and the conditional reconfiguration parameter comprises a CPC configuration parameter and/or a CPA configuration parameter.

39. A terminal, comprising a processor and a memory, wherein the memory stores a program or instructions executable on the processor, and when the program or instructions are executed by the processor, steps of the mobility control method according to any one of claims 1 to 13 are implemented.

40. A network side device, comprising a processor and a memory, wherein the memory stores a program or instructions executable on the processor, and when the program or instructions are executed by the processor, steps of the mobility control method according to any one of claims 27 to 31 or the mobility control method according to claim 37 are implemented.

41. A readable storage medium, wherein the readable storage medium stores a program or instructions, and when the program or instructions are executed by a processor, steps of the mobility control method according to any one of claims 1 to 13, or the mobility control method according to any one of claims 27 to 31, or the mobility control method according to claim 37 are implemented.

42. A chip, wherein the chip comprises a processor and a communication interface, the communication interface is coupled to the processor, and the processor is configured to run a program or instructions to implement steps of the mobility control method according to any one of claims 1 to 13, or the mobility control method according to any one of claims 27 to 31, or the mobility control method according to claim 37.

43. A computer program product, wherein the program product is stored in a non-volatile storage medium, and the program product is executed by at least one processor to implement steps of the mobility control method according to any one of claims 1 to 13, or the mobility control method according to any one of claims 27 to 31, or the mobility control method according to claim 37.

44. An electronic device, wherein the electronic device is configured to implement steps of the mobility control method according to any one of claims 1 to 13, or the mobility control method according to any one of claims 27 to 31, or the mobility control method according to claim 37.
